# EUROPEAN PATENT APPLICATION

(11) **EP 4 811 721 A1**
(43) Date of publication of application: **23.09.2026**
(21) Application number: 24902328.4
(22) Date of filing: 11.10.2024
(51) Int. Cl.: H04L 9/40

(54) **TRUST MODEL EVALUATION METHOD AND APPARATUS**

(30) Priority: 15.12.2023 CN 202311739101
(71) Applicant: Huawei Technologies Co., Ltd., Shenzhen, Guangdong 518129 (CN)
(72) Inventor: KANG, Xin, Shenzhen, Guangdong 518129 (CN); LI, Tieyan, Shenzhen, Guangdong 518129 (CN)
(74) Representative: Grünecker Patent- und Rechtsanwälte PartG mbB
(86) International application number: PCT/CN2024/124223
(87) International publication number: WO 2025/123902

(57) **Abstract**

This application discloses a trust model assessment method and apparatus, and relates to the information security field. The method includes: performing trust assessment on a first entity based on a trust model, to obtain a trust assessment result of the first entity, where the trust assessment result includes at least one group, each group of trust assessment results corresponds to one first metric, and the first metric indicates an assessment dimension of the trust model; and assessing the trust model based on the trust assessment result, to obtain an assessment result of the trust model, where the assessment result of the trust model indicates a trust assessment capability of the trust model in the dimension of the first metric. According to this application, a trust assessment capability of a trust model may be assessed based on a dimension of a first metric for an entity like the first entity in a specific application scenario, so as to provide a decision basis for selecting a trust model.

## Description

This application claims priority to Chinese Patent Application No. 202311739101.6, filed on December 15, 2023 and entitled "TRUST MODEL ASSESSMENT METHOD AND APPARATUS", which is incorporated herein by reference in its entirety.

### TECHNICAL FIELD

This application relates to the information security field, and in particular, to a trust model assessment method and apparatus.

### BACKGROUND

Trust assessment (trust assessment) usually means to assess trust levels of entities in an application scenario. Whether an entity is trusted, whether the entity can perform interaction, whether data of the entity is available, or the like can be learned by assessing a trust level of the entity. For example, in some communication-related application scenarios, an entity may be an interaction object or a communication node in a communication network, for example, a network device or a terminal device. Based on a trust assessment result of a communication node in the communication network, whether the communication node is secure may be determined, for example, whether data of the communication node is trusted, to detect security and reliability of the communication network.

A trust assessment method may include: performing trust assessment on an entity by using a trust assessment model, and outputting a trust assessment result of the entity. The trust assessment model is also referred to as a trust model, and the trust assessment result may be a trust level of the entity. Different trust models may output trust assessment results at different granularities. For example, trust assessment results output by some trust models may include only trusted or untrusted, and a granularity is large (or coarse). Trust assessment results output by some trust models may be classified based on a plurality of trust levels, and a granularity is small (or fine).

For an entity in a specific application scenario, currently, a trust model is manually selected based on manual experience to perform trust assessment on the entity. However, a trust assessment result output by the manually selected trust model may be at an excessively coarse granularity, resulting in low accuracy of the trust assessment result; or may be at an excessively fine granularity, resulting in an increase in unnecessary computing costs.

### SUMMARY

This application provides a trust model assessment method and apparatus, to assess a trust assessment capability of a trust model based on a dimension of a first metric for an entity like a first entity in a specific application scenario, so as to provide a decision basis for selecting a trust model.

According to a first aspect, this application provides a trust model assessment method. The method includes: performing trust assessment on a first entity based on a trust model, to obtain a trust assessment result of the first entity, where the trust assessment result includes at least one group, each group of trust assessment results corresponds to one first metric, and the first metric indicates an assessment dimension of the trust model; and assessing the trust model based on the trust assessment result, to obtain an assessment result of the trust model, where the assessment result of the trust model indicates a trust assessment capability of the trust model in the dimension of the first metric.

For example, the method is applied to an electronic device. For example, the method is performed by the electronic device, or an apparatus (for example, a chip or a functional module) disposed in the electronic device.

According to the trust model assessment method, a trust assessment capability of the trust model may be assessed based on the dimension of the first metric for an entity like the first entity in a specific application scenario. The trust assessment capability of the trust model may be assessed, to assist trust assessment of the entity in the application scenario in selecting a more adaptive trust model, or assist a user in determining whether the selected trust model is appropriate, that is, providing a decision basis for selecting a trust model. For example, the user may determine, based on the assessment result of the trust model, whether a trust assessment granularity is appropriate, or select a trust model at a more appropriate trust assessment granularity.

In a possible design, the performing trust assessment on the first entity based on the trust model, to obtain the trust assessment result of the first entity includes: obtaining the first metric, scenario information of an application scenario, and entity information of the first entity; generating an assessment environment based on the first metric, the scenario information of the application scenario, and the entity information of the first entity, where the assessment environment indicates an environment in which the first entity runs in the application scenario; and invoking the trust model to perform trust assessment on the first entity based on the assessment environment, to obtain a trust assessment result of the trust model for the first entity.

In this design, for a specific application scenario and the first entity in the application scenario, after the assessment environment is generated, the trust assessment capability of the trust model is further assessed based on the assessment environment, to flexibly adjust the assessment environment based on the application scenario and the first entity. The method is more flexibly applicable to assessment of trust models in more application scenarios. In other words, an implementation framework of the method may be flexibly adjusted based on application scenarios and a change of the first entity, and has strong adaptability.

In a possible design, the obtaining the first metric, the scenario information of the application scenario, and the entity information of the first entity includes: obtaining the scenario information of the application scenario and the entity information of the first entity; and obtaining the first metric based on the scenario information of the application scenario and the entity information of the first entity.

For example, a manner of obtaining the scenario information of the application scenario and the entity information of the first entity may include: receiving the scenario information of the application scenario and the entity information of the first entity that are input by the user, or obtaining the scenario information of the application scenario and the entity information of the first entity from a specified data interface.

In some implementations, the first metric used for generating the assessment environment may be predefined, pre-configured, or configured. For example, a matching assessment metric may be configured for the application scenario and the entity, to obtain a mapping relationship between the assessment metric and the application scenario and the entity. The obtaining the first metric based on the scenario information of the application scenario and the entity information of the first entity includes: determining, based on the mapping relationship, an assessment metric, for example, a target assessment metric, matching the application scenario and the first entity; and selecting, from the target assessment metric, at least one metric as the first metric.

In this implementation, the first metric may be related to the application scenario and/or the first entity, and may be selected for a current application environment and the first entity in a customized manner based on a user design, and the trust model is assessed. This can improve accuracy of an assessment result of a trust model, so that the assessment result of the trust model reflects performance of the trust model from a more accurate and effective dimension.

In some other implementations, alternatively, the first metric used for generating the assessment environment may be dynamically determined based on the scenario information and the entity information of the first entity. For example, the obtaining the first metric based on the scenario information of the application scenario and the entity information of the first entity includes: dynamically determining, by using a pre-trained neural network model and based on the scenario information and the entity information of the first entity in a deep learning or machine learning manner, an assessment metric, for example, a target assessment metric, matching the application scenario and the first entity; and selecting, from the target assessment metric, at least one metric as the first metric.

In this design, the first metric may be dynamically selected for a current application environment and the first entity in a customized manner, and the trust model is assessed. This can improve accuracy of an assessment result of a trust model, enhance adaptability of trust model assessment to different application scenarios, and increase assessment flexibility, so that the assessment result of the trust model reflects performance of the trust model from a more accurate and effective dimension.

In still another possible design, the first metric used for generating the assessment environment may alternatively be one or more first metrics selected by the user from first metrics obtained based on the scenario information of the application scenario and the entity information of the first entity. For example, the user may perform a selection operation on the first metric. The method further includes: in response to the selection operation performed by the user on the first metric, using a first metric indicated by the selection operation as the first metric used for generating the assessment environment.

In this design, the first metric obtained based on the scenario information of the application scenario and the entity information of the first entity may be referred to as a candidate first metric, and the first metric selected by the user from the candidate first metric may be referred to as a target first metric.

In this design, the first metric may be selected for the current application environment and the first entity in a customized manner, and the user may be further allowed to adjust the first metric based on a specific requirement of the user. For example, the user may select a more meaningful or related first metric based on a requirement, to further improve a value of the assessment result of the trust model for the user. In addition, by screening and selecting a more related first metric, noise caused by irrelevant or secondary metrics may be further reduced, and accuracy of an assessment result is further improved.

Alternatively, the user may select some specific metrics for assessment based on a requirement for saving assessment time and resources, to improve assessment efficiency.

In a possible design, the obtaining the first metric based on the scenario information of the application scenario and the entity information of the first entity includes: fusing the scenario information of the application scenario and the entity information of the first entity, to obtain a fusion feature; and obtaining the first metric based on the fusion feature.

For example, a scenario feature of the scenario information of the application scenario and an entity feature of the entity information of the first entity may be extracted, and the scenario feature and the entity feature are fused, to obtain the fusion feature.

In this design, the first metric is obtained based on the fusion feature, to further improve validity or accuracy of the first metric, and select a more adaptive first metric for the application scenario and the first entity to assess the trust model.

In a possible design, the generating the assessment environment based on the first metric, the scenario information of the application scenario, and the entity information of the first entity in the application scenario includes: for each first metric, generating, based on the first metric, the scenario information of the application scenario, and the entity information of the first entity in the application scenario, the assessment environment corresponding to the first metric.

Correspondingly, the invoking the trust model to perform trust assessment on the first entity based on the assessment environment, and outputting the trust assessment result of the first entity includes: performing trust assessment on the first entity based on the assessment environment corresponding to the first metric, and outputting the trust assessment result of the first entity.

In other words, in this design, each first metric corresponds to one assessment environment, and different first metrics correspond to different assessment environments. In this design, for a plurality of first metrics, a process of generating assessment environments based on the first metrics and performing assessment based on the assessment environments may be implemented in a serial manner. For example, a trust assessment capability of a trust model may be first assessed for one first metric. After the trust model corresponding to the first metric is assessed, a trust model corresponding to a next first metric may continue to be assessed until trust models corresponding to all first metrics are assessed.

In this design, for the plurality of first metrics, the process of generating assessment environments based on the first metrics and performing assessment based on the assessment environments is implemented in a serial manner. Focusing on a single metric (only one specific first metric is assessed at a time) can make the assessment process simpler and clearer, and easy to understand and explicate. In addition, for the plurality of first metrics, the assessment environments are generated based on the first metrics and assessment is performed based on the assessment environments in a serial manner, to further enhance an assessment depth and improve assessment accuracy. For example, resources and attention may be focused on one metric, to avoid noise and interference caused by the plurality of metrics, and more clearly understand and analyze importance and a function of each metric.

In a possible design, the generated assessment environment may include an initial assessment environment and at least one other assessment environment. The initial assessment environment is generated based on the first metric, the scenario information, and the entity information of the first entity. The another assessment environment may be obtained by adjusting a parameter in the initial assessment environment.

For example, in this design, the method further includes: adjusting the parameter in the assessment environment, to obtain at least one updated assessment environment; and invoking the trust model to perform trust assessment on the first entity based on the updated assessment environment, and outputting the trust assessment result of the first entity. The assessment environment is the initial assessment environment, and the updated assessment environment is the another assessment environment.

In this design, the assessment environment can be extended to provide a richer assessment environment for trust model assessment and improve accuracy of trust model assessment. For example, the trust model may be assessed based on a plurality of assessment environments such as the initial assessment environment and the another assessment environment, and performance of the trust model is comprehensively assessed based on assessment results obtained in different assessment environments.

In a possible design, the application scenario includes at least one of the following: a cybersecurity scenario, an intelligent system scenario, an online platform scenario, a complex decision environment scenario, an Internet of things scenario, a cloud computing scenario, an edge computing scenario, a network slicing and virtualized network scenario, a software-defined network scenario, a blockchain scenario, and a communication network scenario. The first entity includes at least one of the following: a hardware device or module, an application or a software module, and data exchanged between hardware and/or software.

In a possible design, the assessment result of the trust model further indicates an update policy of the trust model.

In this design, the assessment result of the trust model may indicate the update policy of the trust model, and can indicate an improvement direction (dimension) of the trust model for a developer or the user, or provide a more detailed model optimization suggestion for the user, so that the user can further optimize or adjust the trust model based on the assessment result of the trust model. This improves performance of the trust model.

In a possible design, the method further includes: updating the trust model based on the assessment result of the trust model.

In this design, the trust model is updated based on the assessment result, to improve the trust assessment capability of the trust model.

In a possible design, the assessment result of the trust model is a semantic trust assessment report.

For example, the trust assessment result corresponding to the first metric may be input into a large language model (large language model, LLM), the trust assessment result corresponding to the first metric is parsed by using the LLM, and the semantic trust assessment report is output as an assessment result of the trust model.

In this design, the semantic trust assessment report is used as the assessment result of the trust model, so that the user can better understand the trust assessment capability of the trust model in the dimension of the first metric, and more intuitively understand dimensions from which the trust model can be improved, and/or a manner in which the trust model can be improved.

In a possible design, the first metric includes one or more of the following metrics: security of data, comprehensiveness of a trust assessment result, usability of a trust model, functionality of the trust model, robustness of the trust model, neutrality of the trust assessment result, and explicability of the trust assessment result.

A specific type of the first metric is not limited in this application.

According to a second aspect, this application provides a trust model assessment apparatus. The apparatus has a function of implementing the method in the first aspect. The function may be implemented by hardware, or may be implemented by executing corresponding software by hardware. The hardware or the software includes one or more units or modules, for example, a trust assessment unit and a model assessment unit, corresponding to the function of the method in the first aspect.

The trust assessment unit is configured to perform trust assessment on a first entity based on a trust model, to obtain a trust assessment result of the first entity, where the trust assessment result includes at least one group, each group of trust assessment results corresponds to one type of first metric, and the first metric indicates an assessment dimension of the trust model.

The model assessment unit is configured to assess the trust model based on the trust assessment result, to obtain an assessment result of the trust model, where the assessment result of the trust model indicates a trust assessment capability of the trust model in the dimension of the first metric.

In a possible design, the trust assessment unit is specifically configured to: obtain the first metric, scenario information of an application scenario, and entity information of the first entity; generate an assessment environment based on the first metric, the scenario information of the application scenario, and the entity information of the first entity, where the assessment environment indicates an environment in which the first entity runs in the application scenario; and invoke the trust model to perform trust assessment on the first entity based on the assessment environment, to obtain a trust assessment result of the trust model for the first entity.

In a possible design, the trust assessment unit is specifically configured to: obtain the scenario information of the application scenario and the entity information of the first entity; and obtain the first metric based on the scenario information of the application scenario and the entity information of the first entity.

In a possible design, the first metric used for generating the assessment environment may be predefined, pre-configured, or configured. For example, a matching assessment metric may be configured for the application scenario and the entity, to obtain a mapping relationship between the assessment metric and the application scenario and the entity. The trust assessment unit is specifically configured to: determine, based on the mapping relationship, an assessment metric, for example, a target assessment metric, matching the application scenario and the first entity; and select, from the target assessment metric, at least one metric as the first metric.

In another possible design, alternatively, the first metric used for generating the assessment environment may be dynamically determined based on the scenario information and the entity information of the first entity. For example, the trust assessment unit is further configured to: dynamically determine, by using a pre-trained neural network model and based on the scenario information and the entity information of the first entity in a deep learning or machine learning manner, an assessment metric, for example, a target assessment metric, matching the application scenario and the first entity; and select, from the target assessment metric, at least one metric as the first metric.

In still another possible design, the first metric used for generating the assessment environment may alternatively be one or more first metrics selected by the user from first metrics obtained based on the scenario information of the application scenario and the entity information of the first entity. For example, the trust assessment unit is further configured to: in response to the selection operation performed by the user on the first metric, use a first metric indicated by the selection operation as the first metric used for generating the assessment environment.

In a possible design, the trust assessment unit is specifically configured to: fuse the scenario information of the application scenario and the entity information of the first entity, to obtain a fusion feature; and obtain the first metric based on the fusion feature.

In a possible design, the trust assessment unit is specifically configured to: for each first metric, generate, based on the first metric, the scenario information of the application scenario, and the entity information of the first entity in the application scenario, the assessment environment corresponding to the first metric; and perform trust assessment on the first entity based on the assessment environment corresponding to the first metric, and output the trust assessment result of the first entity.

In other words, in this design, each first metric corresponds to one assessment environment, and different first metrics correspond to different assessment environments.

In a possible design, the generated assessment environment may include an initial assessment environment and at least one other assessment environment. The initial assessment environment is generated based on the first metric, the scenario information, and the entity information of the first entity. The another assessment environment may be obtained by adjusting a parameter in the initial assessment environment. For example, the trust assessment unit is further configured to: adjust the parameter in the assessment environment, to obtain at least one updated assessment environment; and invoke the trust model to perform trust assessment on the first entity based on the updated assessment environment, and output the trust assessment result of the first entity. The assessment environment is the initial assessment environment, and the updated assessment environment is the another assessment environment.

In a possible design, the application scenario includes at least one of the following: a cybersecurity scenario, an intelligent system scenario, an online platform scenario, a complex decision environment scenario, an Internet of things scenario, a cloud computing scenario, an edge computing scenario, a network slicing and virtualized network scenario, a software-defined network scenario, a blockchain scenario, and a communication network scenario. The first entity includes at least one of the following: a hardware device or module, an application or a software module, and data exchanged between hardware and/or software.

In a possible design, the assessment result of the trust model further indicates an update policy of the trust model.

In a possible design, the apparatus further includes: an update unit, configured to update the trust model based on the assessment result of the trust model.

In a possible design, the assessment result of the trust model is a semantic trust assessment report.

In a possible design, the first metric includes one or more of the following metrics: security of data, comprehensiveness of a trust assessment result, usability of a trust model, functionality of the trust model, robustness of the trust model, neutrality of the trust assessment result, and explicability of the trust assessment result.

According to a third aspect, this application further provides a trust model assessment apparatus, including a processor, configured to execute computer instructions stored in a memory. When the computer instructions are executed, the apparatus is enabled to perform the method in the first aspect or any possible design of the first aspect. Alternatively, the processor is configured to perform the method in the first aspect or any possible design of the first aspect.

According to a fourth aspect, this application further provides a trust model assessment apparatus, including a processor and an interface circuit. The processor is configured to communicate with another apparatus through the interface circuit, and perform the method in the first aspect or any possible design of the first aspect.

The trust model assessment apparatus in the second aspect to the fourth aspect may be an electronic device, or may be an apparatus (for example, a chip) disposed in the electronic device.

According to a fifth aspect, this application further provides a computer-readable storage medium, including computer software instructions (or referred to as instructions). When the computer software instructions are run, the method in the first aspect or any possible design of the first aspect is implemented. For example, when the computer software instructions are run in the electronic device or an apparatus (for example, a chip) disposed in the electronic device, the electronic device is enabled to perform the method in the first aspect or any possible design of the first aspect.

It may be understood that, for beneficial effect that can be achieved in the second aspect to the fifth aspect, refer to beneficial effect in the first aspect or any possible design of the first aspect. Details are not described herein again.

According to a sixth aspect, this application further provides a trust model assessment apparatus, including a transceiver unit and a processing unit. The transceiver unit may be configured to receive and send information, or configured to communicate with another network element (for example, a terminal device, a network device, or another electronic device or apparatus). The processing unit may be configured to process data. The apparatus may implement the method in the first aspect or any possible design of the first aspect by using the transceiver unit and the processing unit.

According to a seventh aspect, this application further provides a computer program product. When the computer program product is executed, the method in the first aspect or any possible design of the first aspect may be implemented.

According to an eighth aspect, this application further provides a chip system. The chip system includes one or more interface circuits and one or more processors. The interface circuit and the processor are interconnected through a line. The processor receives computer instructions from a memory of an electronic device through the interface circuit and executes the computer instructions, to implement the method in the first aspect or any possible design of the first aspect.

According to a ninth aspect, this application further provides an artificial intelligence model. The artificial intelligence model has a function of implementing the method in the first aspect or any possible design of the first aspect.

Optionally, the artificial intelligence model includes one or more models, and when the artificial intelligence model includes a plurality of models, the plurality of models implement different functions in the method in the first aspect or any possible design of the first aspect.

According to a tenth aspect, this application further provides a communication system. The communication system includes a first entity and a second entity, and the second entity interacts with the first entity to implement the method in the first aspect or any possible design of the first aspect.

It may be understood that for beneficial effect that can be achieved in the sixth aspect to the tenth aspect, refer to beneficial effect in the first aspect to the fifth aspect and the like. Details are not described herein again.

It should be understood that descriptions of technical features, technical solutions, beneficial effects, or similar languages in this application do not imply that all features and advantages can be implemented in any single embodiment. On the contrary, it may be understood that descriptions of features or beneficial effect indicate that at least one embodiment includes specific technical features, technical solutions, or beneficial effect. Therefore, descriptions of technical features, technical solutions, or beneficial effect in this specification do not necessarily refer to a same embodiment. Further, the technical features, technical solutions, and beneficial effect described in embodiments may be combined in any proper manner. A person skilled in the art may understand that an embodiment may be implemented without one or more specific technical features or technical solutions, or beneficial effect in a specific embodiment. In other embodiments, additional technical features and beneficial effect may also be identified in specific embodiments that do not reflect all embodiments.

### BRIEF DESCRIPTION OF DRAWINGS

FIG. 1 is a diagram of composition of an electronic device according to an embodiment of this application;
FIG. 2 is a schematic flowchart of a trust model assessment method according to an embodiment of this application;
FIG. 3 is a diagram of a principle of a trust model assessment system according to an embodiment of this application;
FIG. 4A and FIG. 4B are a schematic flowchart of another implementation of a trust model assessment method according to an embodiment of this application;
FIG. 5 is a diagram of a principle of another trust model assessment system according to an embodiment of this application;
FIG. 6A to FIG. 6C are a schematic flowchart of still another implementation of a trust model assessment method according to an embodiment of this application;
FIG. 7A to FIG. 7D are a schematic flowchart of still another implementation of a trust model assessment method according to an embodiment of this application;
FIG. 8A to FIG. 8C are a schematic flowchart of still another implementation of a trust model assessment method according to an embodiment of this application;
FIG. 9A to FIG. 9C are a schematic flowchart of still another implementation of a trust model assessment method according to an embodiment of this application; and
FIG. 10 is a diagram of composition of a trust model assessment apparatus according to an embodiment of this application.

### DESCRIPTION OF EMBODIMENTS

Trust assessment (trust assessment) usually means to assess trust levels of entities in an application scenario. Whether an entity is trusted, whether the entity can perform interaction, whether data of the entity is available, or the like can be learned by assessing a trust level of the entity.

For example, in some communication-related application scenarios, an entity may be an interaction object or a communication node in a communication network, for example, a network device or a terminal device. Based on a trust assessment result of a communication node in the communication network, whether the communication node is secure may be determined, for example, whether data of the communication node is trusted, to detect security and reliability of the communication network.

A trust assessment method may include: performing trust assessment on an entity by using a trust assessment model, and outputting a trust assessment result of the entity. The trust assessment model is also referred to as a trust model, and the trust assessment result may be a trust level of the entity. The trust level may also be referred to as a trust degree, a confidence, reliability, or the like. A manner of describing the trust level is not limited herein.

Different trust models may output trust assessment results at different granularities. For example, in some trust models, trust levels of an entity are defined as two levels, including trusted or untrusted. The trust assessment result of the entity output by the trust model is one of the two levels, for example, the trust assessment result is trusted or untrusted. A trust assessment granularity of the trust model is large (or coarse).

In addition, trust assessment results output by some trust models may be classified based on a plurality of trust levels, or the trust levels of the entity are defined as a plurality of degrees such as high, medium, and low. The trust assessment result of the entity output by the trust model is one of the plurality of degrees. The trust assessment granularity of the trust model is related to a quantity of degrees. A larger quantity of degrees indicates a smaller granularity (or finer granularity).

For an entity in a specific application scenario, currently, a trust model is manually selected based on manual experience to perform trust assessment on the entity. However, a trust assessment result output by the manually selected trust model may be at an excessively coarse granularity, resulting in low accuracy of the trust assessment result; or may be at an excessively fine granularity, resulting in an increase in unnecessary computing costs.

Therefore, embodiments of this application provide a trust model assessment method, to assess a trust assessment capability of a trust model based on a dimension of a first metric for an entity like a first entity in a specific application scenario, so as to provide a decision basis for selecting a trust model.

For example, for a specific application scenario and entity, this can help select a trust model at a more appropriate trust assessment granularity to perform trust assessment on the entity in the application scenario, to improve accuracy of a trust assessment result, and reduce unnecessary computing costs.

For example, trust assessment is performed on the first entity in the application scenario. The method may include: performing trust assessment on the first entity based on a trust model, to obtain a trust assessment result of the first entity, where the trust assessment result includes at least one group, each group of trust assessment results corresponds to one first metric, and the first metric indicates an assessment dimension of the trust model; and assessing the trust model based on the trust assessment result, to obtain an assessment result of the trust model, where the assessment result of the trust model indicates a trust assessment capability of the trust model in the dimension of the first metric.

For example, the trust model assessment method provided in embodiments of this application may be performed by an electronic device, or may be performed by an apparatus (for example, one or more functional modules in a chip or an electronic device) disposed in the electronic device.

In some embodiments, the electronic device may be an entity in an application scenario or an electronic device related to the entity. For example, in an application scenario, the first entity interacts with a second entity. When the trust assessment capability of the trust model is assessed for the application scenario and the first entity, the electronic device may be the second entity (the second entity is an electronic device), or the electronic device may be a device that carries the second entity or an electronic device included in the second entity, or the electronic device may be another electronic device that has data interaction or connection with the second entity.

In some other embodiments, the electronic device may be a device outside an application scenario. For example, the electronic device may be a computer or a server, or may be another device having a data processing capability, for example, a mobile phone, a computer, or a wireless terminal.

It should be further understood that the electronic device may be one electronic device, or may include a plurality of electronic devices. A server is used as an example. The server may be an independent server, or may be a server cluster including a plurality of servers. In some implementations, the server cluster may alternatively be a distributed cluster.

An implementation or a product form of the electronic device and an execution body of the trust model assessment method are not limited in this application.

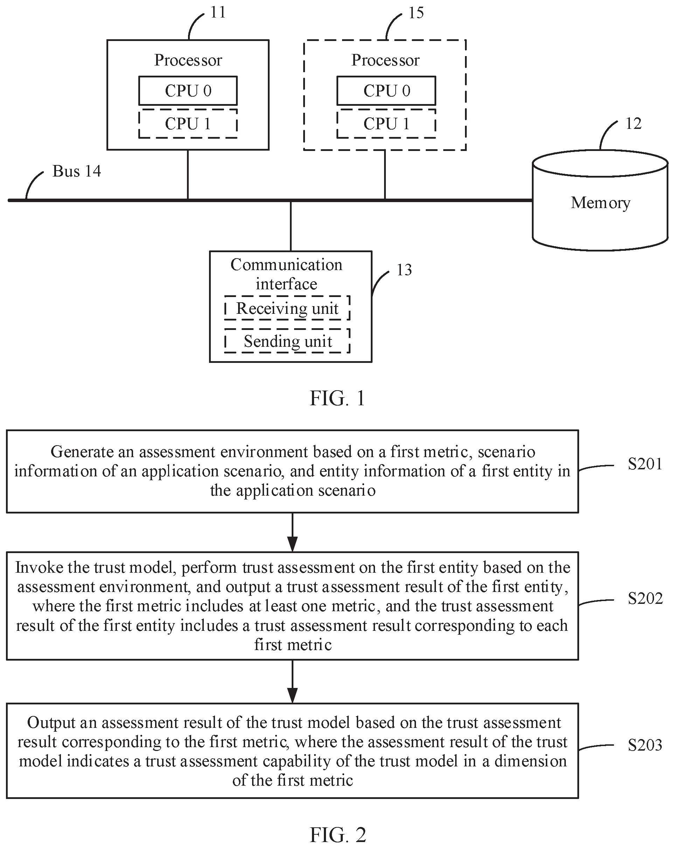

For example, FIG. 1 is a diagram of composition of an electronic device according to an embodiment of this application. In a possible implementation, the trust model assessment method provided in embodiments of this application may be applied to the electronic device shown in FIG. 1. As shown in FIG. 1, the electronic device may include at least one processor 11, a memory 12, a communication interface 13, and a bus 14.

The processor 11 is a control center of the electronic device, and may be a processor, or may be a collective term of a plurality of processing elements. For example, the processor 11 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processor, DSP), or one or more field programmable gate arrays (field programmable gate array, FPGA).

The processor 11 may perform various functions of the electronic device by running or executing a software program stored in the memory 12 and invoking data stored in the memory 12. For example, steps included in the trust model assessment method provided in embodiments of this application may be performed.

During specific implementation, in an embodiment, the processor 11 may include one or more CPUs, for example, a CPU 0 and a CPU 1 in FIG. 1.

During specific implementation, in an embodiment, the electronic device may include a plurality of processors, for example, the processor 11 and a processor 15 shown in FIG. 1. Each of the processors may be a single-core processor (single-CPU), or may be a multi-core processor (multi-CPU). The processor herein may be one or more devices, circuits, and/or processing cores configured to process data (for example, computer program instructions).

The memory 12 may store a software program of the method steps performed by the electronic device, and the processor 11 controls execution of the software program. The memory 12 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), or a magnetic disk storage medium or another magnetic storage device, or any other medium that can be configured to carry or store expected program code in a form of instructions or a data structure and that is accessible by a computer, but is not limited thereto.

The memory 12 may exist independently and be connected to the processor 11 through the bus 14. Alternatively, the memory 12 may be integrated with the processor 11. This is not limited herein.

The communication interface 13 is configured to communicate with another device or communication network through any transceiver-type apparatus. The communication interface 13 may be an Ethernet interface, a radio access network (radio access network, RAN) interface, a wireless local area network (wireless local area network, WLAN) interface, or the like. The communication interface 13 may include a receiving unit for implementing a receiving function and a sending unit for implementing a sending function.

The bus 14 may be an industry standard architecture (Industry Standard Architecture, ISA) bus, a peripheral component interconnect (peripheral component interconnect, PCI) bus, an extended industry standard architecture (Extended Industry Standard Architecture, EISA) bus, or the like. The bus may be classified into an address bus, a data bus, a control bus, and the like. For ease of representation, only one bold line is used for representation in FIG. 1, but it does not represent that there is only one bus or one type of bus.

Although the bus 14 is used in FIG. 1, it may be understood that the bus may alternatively be replaced with a connection relationship in another form, and is not limited to the bus.

It should be understood that FIG. 1 is merely an example for description. In embodiments of this application, the electronic device may alternatively include more or fewer components than those shown in FIG. 1. This is not limited herein.

The following uses examples to describe the trust model assessment method provided in embodiments of this application.

It should be noted that processing described below as being performed by a single execution body may alternatively be divided into processing performed by a plurality of execution bodies. These execution bodies may be logically and/or physically separated. For example, a function related to the trust model assessment method may be divided into functions performed by at least one functional module. In addition, in the descriptions of embodiments of this application, words such as "first" and "second" are merely used for distinguishing and description, and are not used to specially limit a feature, that is, "first" or "second" may include more content, but is not limited to a specific concept. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects. "At least one" means one or more, and "a plurality of" means two or more. In embodiments of this application, only fewer steps than all steps may be performed, or more steps may be performed. This is not limited. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and both A, B, and C exist. A, B, and C may be singular or plural.

Unless otherwise defined, all technical and scientific terms used in this specification have same meanings as those usually understood by a person skilled in the art of this application. Terms used in the specification of this application are merely for the purpose of describing specific embodiments, but are not intended to limit this application.

As described above, in the trust model assessment method provided in this application, trust assessment may be performed on the first entity based on the trust model, to obtain the trust assessment result of the first entity, where the trust assessment result includes the at least one group, each group of trust assessment results corresponds to one first metric, and the first metric indicates the assessment dimension of the trust model. The trust model is assessed based on the trust assessment result, to obtain the assessment result of the trust model, where the assessment result of the trust model indicates the trust assessment capability of the trust model in the dimension of the first metric.

In some implementations, the trust assessment result of the trust model for the first entity may be obtained by a user by assessing the first entity by using the trust model, or may be a trust assessment result obtained from another existing data source.

In some other implementations, an assessment environment may be first constructed for a specific application scenario and entity, and the trust assessment result of the trust model for the first entity is obtained based on the assessment environment. The following uses this implementation as an example to describe the method.

For example, FIG. 2 is a schematic flowchart of a trust model assessment method according to an embodiment of this application. As shown in FIG. 2, the trust model assessment method may include S201 to S203. For example, S201 to S203 may be performed by an electronic device, or may be performed by an apparatus (for example, one or more functional modules in a chip or an electronic device) disposed in the electronic device. For the electronic device, refer to the electronic device in the foregoing embodiments.

S201: Generate an assessment environment based on a first metric, scenario information of an application scenario, and entity information of a first entity in the application scenario.

The assessment environment may indicate an environment in which the first entity runs in the application scenario.

For example, in embodiments of this application, the application scenario may include a cybersecurity scenario, an intelligent system scenario, an online platform scenario, and a complex decision environment scenario. For any one of the foregoing application scenarios, the first entity may be any real object or virtual object in the application scenario, for example, a hardware device or module, an application or a software module, or data exchanged between hardware and/or software.

For example, in the cybersecurity scenario, as network attacks and data leakage events increase, it is increasingly important to ensure a trust level in network interaction and data transmission. Reliability of a network node or data is assessed, to identify potential security threats, and ensure data integrity and privacy. When the trust model assessment method provided in embodiments of this application is applied to the cybersecurity scenario, the first entity may be any object in a network (for example, a communication network or another network), for example, a network device, hardware or a software module running in the network device, or data generated or exchanged by network devices.

For another example, the intelligent system may include an autonomous driving system, and an intelligent medical decision-making system. This is not limited herein. In the autonomous driving system, a vehicle needs to assess a trust level of another entity (for example, a pedestrian, another vehicle, or a road sign) in a surrounding environment. The trust model may provide trust rating for the vehicle based on data of the another entity and a situation, to improve autonomous driving safety. When the trust model assessment method provided in embodiments of this application is applied to the autonomous driving system scenario, the first entity may be a pedestrian, hardware or a software module in a vehicle, another vehicle or a road sign, data exchanged or generated by these entities, or the like. In the intelligent medical decision-making system, it is necessary to perform trust assess on various medical devices, medicines, and treatment methods, to improve safety. When the trust model assessment method provided in embodiments of this application is applied to the intelligent medical decision-making system scenario, the first entity may be a medical device, a medicine, a treatment method, or the like.

For another example, the online platform may include an e-commerce platform and a social network platform. This is not limited herein. In the e-commerce platform scenario, a purchaser needs to assess a reputation of a store or a commodity when shopping. A trust model can provide more accurate and detailed trust assessment for the user, to optimizing shopping experience of the user. When the trust model assessment method provided in embodiments of this application is applied to the e-commerce platform scenario, the first entity may be a store or a commodity. In the social network platform scenario, when a user interacts with unknown users, the user wants to know reliability of the other users. The trust model can provide detailed trust assessment for the user based on historical behavior and feedback of the other users, to help the user better determine which users to interact with. When the trust model assessment method provided in embodiments of this application is applied to the social network platform scenario, the first entity may be a user account.

For another example, the complex decision environment may include finance and insurance. In the finance and insurance fields, decision-making often involves capital flows and risks. Decision makers need to accurately assess reliability of various investments or strategies. The trust model can flexibly adapt to different market conditions, dynamically assess various data and information, and provide clear and specific trust levels for decision makers. When the trust model assessment method provided in embodiments of this application is applied to the complex decision environment scenario, the first entity may be data and information that need to be assessed.

It should be understood that the foregoing application scenarios are all examples for description, and the trust model assessment method is further applicable to more application scenarios that have a trust assessment requirement. For example, the trust model assessment method may be applied to an Internet of things scenario, and the first entity may be a device or a sensor. Alternatively, the trust model assessment method may be applied to a cloud computing scenario, and the first entity may be a compute device or a storage device. Alternatively, the trust model assessment method may be applied to an edge computing scenario, and the first entity may be an edge node or a central node. Alternatively, the trust model assessment method may be applied to a network slice and virtualized network scenario, a software-defined network scenario, a blockchain scenario, and the like. Examples are not enumerated in this application, but application scenarios to which the trust model assessment method is applicable are not limited in this application.

In S201, the scenario information of the application scenario may be used to describe content of the application scenario. For example, the scenario information may include entities included in the application scenario, and a connection or interaction relationship between the entities. The first entity may be any one or more entities in the application scenario. The entity information of the first entity may be used to describe the first entity. For example, the entity information of the first entity may include static attribute information and/or dynamic behavior information of the first entity. The static attribute information of the first entity may include attribute information of the first entity. The dynamic behavior information of the first entity may include related information about an operation or running of the first entity, information about interaction with another entity, and the like.

For example, the application scenario is a communication network like a cellular network or an Internet protocol (Internet protocol, IP) network, and the first entity may be a network element in the communication network, for example, an access network device (for example, a base station), a terminal device, or a core network device. The scenario information may be network elements included in the communication network, a connection relationship and an interaction relationship between the network elements, and the like. The entity information of the first entity may be information such as a packet loss rate of a first network element and whether a packet is forwarded over a path.

It may be understood that before S201, the method may further include a step of obtaining the scenario information of the application scenario and the entity information of the first entity in the application scenario.

In some possible implementations, for the specific application scenario and the first entity, the scenario information of the application scenario and the entity information of the first entity may be obtained from a specified data source and/or interface. For example, for the autonomous driving system, scenario information of the autonomous driving system and the entity information of the first entity (for example, a vehicle) in the autonomous driving system may be obtained from an application programming interface (application programming interface, API) provided by the autonomous driving system. For another example, for the cellular network, scenario information of the cellular network and the entity information of the first entity (for example, the first network element) in the cellular network may be obtained from a southbound/northbound interface, a serial bus interface (serial bus interface, SBI), or the like of the cellular network.

In some other possible implementations, the scenario information of the application scenario and the entity information of the first entity may alternatively be input by the user. For example, a human-computer interaction interface may be provided, and the user may input the scenario information of the application scenario and the entity information of the first entity through the human-computer interaction interface.

After the scenario information of the application scenario and the entity information of the first entity in the application scenario are obtained, S201 may be performed. In S201, the first metric may be understood as a dimension for assessing the trust model. The first metric may include at least one dimension, that is, the trust model may be assessed in one or more dimensions.

For example, in a possible design, the first metric may include one or more of the following metrics: security (security) of data, comprehensiveness (comprehensiveness) of a trust assessment result, usability (usability) of a trust model, functionality (functionality) of the trust model, robustness (robustness) of the trust model, neutrality (neutrality) of the trust assessment result, explicability (explicability) of the trust assessment result, which are referred to as security, comprehensiveness, usability, functionality, robustness, neutrality, and explicability for short hereinafter.

The security may be used to assess whether the trust model can ensure data security during data processing and prediction, to prevent data leakage or malicious use. The comprehensiveness may be used to assess whether the trust model can cover relevant factors and variables to make prediction and analysis as comprehensive as possible. The usability may be used to assess whether the trust model can be effectively invoked and used when needed, and whether the trust model can maintain stable and reliable performance in different environments. The functionality may be used to assess whether the trust model can effectively implement designed functions of the trust model, including data processing, feature extraction, prediction, analysis, and the like. The robustness may be used to assess whether the trust model can maintain stable performance when there is abnormal or noisy data without serious deviations or errors due to a change of data. The neutrality may be used to assess whether the trust model can remain objective and neutral during prediction and analysis without being affected by subjective factors. The explicability may be used to assess whether a prediction result and an analysis process in trust assessment can be clearly explicated, so that the user can understand a decision basis and an inference process of the model.

In S201, the assessment environment may be generated based on the first metric, the scenario information of the application scenario, and the entity information of the first entity in the application scenario. The application scenario may be restored in the assessment environment. In embodiments of this application, the assessment environment may be understood as a test environment, and performance of the trust model in a dimension of each first metric or performance represented by the trust model in a dimension corresponding to each first metric may be tested in the assessment environment, for example, a trust assessment capability of the trust model in the dimension of the first metric.

For example, the assessment environment may include an environment (environment) module and an agent (agent) module. The environment module may provide environment information such as the scenario information of the application scenario and the entity information of the first entity. The agent module may invoke a trust model that needs to be assessed, assess a trust level of the first entity based on the environment information, and output a trust assessment result of the first entity. For example, S202 may be performed.

S202: Invoke the trust model, perform trust assessment on the first entity based on the assessment environment, and output the trust assessment result of the first entity, where the first metric includes at least one metric, and the trust assessment result of the first entity includes a trust assessment result corresponding to each first metric.

Alternatively, S202 may also be described as invoking the trust model to perform trust assessment on the first entity based on the assessment environment, to obtain a trust assessment result of the trust model for the first entity.

As described in the foregoing embodiment, different trust models may output trust assessment results at different granularities. In S202, a trust model at each granularity level or any granularity level may be invoked, and the trust assessment result of the first entity is output, to assess the trust assessment capability of the trust model at the granularity level.

For example, the trust model in S202 may be at any one of the following granularity levels: a binary level (binary level), a coarse-grained level (coarse-grained level), and a fine-grained level (fine-grained level).

The trust model at the binary level may be used to assess whether an entity can be trusted. A trust assessment result of the trust model at the binary level may be in two states: trusted or untrusted. For example, the entity may be marked as 1 (trusted) or 0 (not trusted). The decision is clear, simple, and easy to explicate without ambiguity. A trust level does not need to be measured or calculated in detail, and few compute resources and time are required in an assessment process. This can be used in a scenario that requires quick decision-making, for example, a binary authentication system and quick selection.

A granularity of the trust model at the coarse-grained level is finer than that of the trust model at the binary level. In other words, a trust assessment result of the trust model at the coarse-grained level has more levels than that of the trust model at the binary level. The trust model at the coarse-grained level defines several preset classification levels for trust levels, for example, "high trust", "medium trust", and "low trust", which is more flexible than the trust model at the binary level. The trust model at the coarse-grained level is applicable to scenarios in which a rough trust level of an entity needs to be known instead of a specific trust value. For example, in some recommendation systems, a user may only care about whether to place "high trust", "medium trust", or "low trust" in a recommendation, and does not need to know a specific trust level or trust score.

A granularity of the trust model at the fine-grained level is finer than that of the trust model at the coarse-grained level, and more detailed trust information can be collected. For example, continuous values or more classification levels can indicate trust levels. The trust model at the fine-grained level is applicable to scenarios that require highly accurate and detailed trust assessment, for example, a complex decision support system, security assessment, and a detailed user feedback system.

For example, in S202, the environment information such as the scenario information of the application scenario and the entity information of the first entity may be input into the trust model, trust assessment is performed on the first entity by using the trust model and based on the scenario information of the application scenario and the entity information of the first entity, and the trust assessment result of the first entity is output. The trust assessment result of the first entity is related to the first metric, and may include a trust assessment result corresponding to each first metric. Trust assessment results corresponding to one first metric may be referred to as one group. In other words, each group of trust assessment results corresponds to one first metric, and different groups of trust assessment results may correspond to different first metrics.

For example, the first metric includes robustness. For robustness, some abnormal data or noisy data may be added to input data, and trust assessment is performed on the first entity for a plurality of times, to obtain a plurality of trust assessment results (that is, trust assessment results, of the first entity, corresponding to the robustness). The plurality of trust assessment results may reflect robustness of the trust model, and can indicate that the trust model maintains stable performance when there is abnormal or noisy data.

For another example, the first metric includes explicability. For explicability, whether the explicability of the trust model matches the application scenario and the first entity may be determined by analyzing whether the trust assessment result of the first entity meets an assessment requirement. Any trust assessment result may be used as a trust assessment result, of the first entity, corresponding to the explicability.

It should be understood that, for different first metrics, trust assessment results, of the first entity, corresponding to the first metrics may be the same or may be different. For example, trust assessment results, of the first entity, corresponding to the functionality and the explicability may be the same. Alternatively, the trust assessment result, of the first entity, corresponding to the explicability is a trust assessment result output for one time, and the trust assessment results, of the first entity, corresponding to the robustness are trust assessment results output for a plurality of times, and the like.

The process described in S201 and S202 may be understood as a process of performing trust assessment on the first entity based on the trust model to obtain the trust assessment result of the first entity. For example, the performing trust assessment on the first entity based on the trust model, to obtain the trust assessment result of the first entity includes: obtaining the first metric, scenario information of an application scenario, and entity information of the first entity; generating an assessment environment based on the first metric, the scenario information of the application scenario, and the entity information of the first entity, where the assessment environment indicates an environment in which the first entity runs in the application scenario; and invoking the trust model to perform trust assessment on the first entity based on the assessment environment, to obtain a trust assessment result of the trust model for the first entity.

The trust assessment result includes a trust assessment result, of the trust model, corresponding to at least one first metric, and the first metric indicates the assessment dimension of the trust model.

After the trust assessment result corresponding to the first metric is obtained, S203 may be performed to assess the trust assessment capability of the trust model.

S203: Output/Determine an assessment result of the trust model based on the trust assessment result corresponding to the first metric, where the assessment result of the trust model indicates a trust assessment capability of the trust model in the dimension of the first metric.

Alternatively, S203 may also be described as: assessing the trust model based on the trust assessment result, to obtain an assessment result of the trust model.

For example, for each first metric, performance of the trust model in the dimension of the first metric, or performance represented by the trust model in the first metric may be obtained through analysis based on the trust assessment result corresponding to the first metric. The performance may be referred to as the trust assessment capability of the trust model. An analysis result may be referred to as an assessment result of the trust model, and the assessment result of the trust model may indicate the trust assessment capability of the trust model in the dimension of the first metric.

For example, the first metric is explicability, that is, the trust assessment result of the first entity includes a trust assessment result corresponding to the explicability. In S203, performance of the trust model in the dimension of explicability may be analyzed and assessed based on the trust assessment result corresponding to the explicability, to obtain an assessment result of the trust model in terms of explicability. The assessment result may indicate a trust assessment capability of the trust model in the dimension of explicability, for example, indicate whether the trust model can clearly explicate a prediction result and an analysis process, and whether the granularity of the trust assessment result output by the trust model is appropriate.

Optionally, the assessment result of the trust model in terms of explicability may be output based on the trust assessment result corresponding to the explicability in a deep learning or machine learning manner. For example, a feature (for example, a granularity, user feedback, and an information entropy) of the trust assessment result may be used as an input, and annotation information, for example, a score (the score indicates an appropriate degree of the trust assessment granularity) or a label (for example, appropriate or inappropriate), of the trust assessment result may be used as an output, to train a neural network model in advance. The neural network model has a function of outputting, based on the feature of the input trust assessment result, whether the trust assessment granularity is appropriate or an appropriate degree (for example, a score). The trust assessment result corresponding to the explicability is input to the neural network model, and the neural network model may output an assessment result of the trust model in terms of explicability, for example, whether the trust assessment granularity is appropriate.

Similarly, for another first metric, the foregoing step of outputting the assessment result of the trust model based on the trust assessment result corresponding to the first metric may also be implemented by using a neural network model in a deep learning or machine learning manner. Examples are not enumerated herein. It should be understood that, for different first metrics, the foregoing step of outputting the assessment result of the trust model based on the trust assessment result corresponding to the first metric may be implemented by using a same neural network model or different neural network models.

As described above, according to the trust model assessment method provided in embodiments of this application, the trust assessment capability of the trust model may be assessed based on the dimension of the first metric for an entity like the first entity in a specific application scenario. The trust assessment capability of the trust model may be assessed, to assist trust assessment of the entity in the application scenario in selecting a more adaptive trust model, or assist a user in determining whether the selected trust model is appropriate, that is, providing a decision basis for selecting a trust model. For example, the user may determine, based on the assessment result of the trust model, whether a trust assessment granularity is appropriate, or select a trust model at a more appropriate trust assessment granularity.

The trust model at the binary level, the trust model at the coarse-grained level, and the trust model at the fine-grained level are used as an example. The trust model at the binary level has a coarse trust assessment granularity, a simple assessment manner, and consumes few compute resources. However, the trust model at the binary level hardly consider an intermediate state or a continuity level of trust levels, and the two-way distinction feature causes the trust model at the binary level to ignore a slight difference, which may result in misjudgment. The trust model at the binary level may ignore the slight differences, assess objects at different trust levels as "trusted" or "untrusted", and cannot further compare "trusted" models. The trust model at the binary level processes edge cases roughly.

The trust model at the fine-grained level provides in-depth and detailed trust assessment, but an assessment manner is complex and may consume a large amount of compute resources.

Compared with the trust model at the binary level and trust model at the fine-grained level, the trust model at the coarse-grained level provides a tool for applications that require a specific classification degree or level, is more flexible than the trust model at the binary level, and is not as complex as the trust model at the fine-grained level. The trust model at the coarse-grained level provides a balance between simplicity and detailed measurement, and provides a tool that is neither too simplified nor too complex for users. However, the trust model at the coarse-grained level may ignore slight differences, and may assess objects at different trust levels into a same level, which may cause errors in processing edge cases to some extent.

When trust assessment is performed on an entity in a specific application scenario, the trust model at the binary level may be used for quick determining in some application scenarios, the trust model at the fine-grained level may be used for refined assessment in some application scenarios, and the trust model at the coarse-grained level may be used for coarse-grained assessment in some application scenarios. This does not waste compute resources. For the user, when a trust model is manually selected to perform trust assessment on the entity, a trust assessment result output by the selected trust model may be at an excessively coarse granularity, resulting in low accuracy of the trust assessment result; or may be at an excessively fine granularity, resulting in problems like an increase in unnecessary computing costs. According to the trust model assessment method provided in embodiments of this application, the trust assessment capability of the trust model is assessed, to help or assist the user in selecting a more adaptive trust model for trust assessment of the entity in the application scenario. For example, the user may determine, based on the assessment result of the trust model, whether a trust assessment granularity is appropriate, or select a trust model at a more appropriate trust assessment granularity.

In addition, in the trust model assessment method, for a specific application scenario and the first entity in the application scenario, after the assessment environment is generated, the trust assessment capability of the trust model is further assessed based on the assessment environment, to flexibly adjust the assessment environment based on the application scenario and the first entity. The method is more flexibly applicable to assessment of trust models in more application scenarios. In other words, an implementation framework of the method may be flexibly adjusted based on application scenarios and a change of the first entity, and has strong adaptability.

It should be further understood that, in embodiments of this application, a richer category of the first metrics indicates a more comprehensive result of assessing the trust assessment capability of the trust model. The assessment result of the trust model is output based on trust assessment results corresponding to different first metrics, so that the assessment result of the trust model can reflect the trust assessment capability of the trust model in different dimensions of the first metrics. This presents or describes performance of the trust model for the user in different dimensions of the first metrics, or presents more comprehensive performance of the trust model. For example, in embodiments of this application, feedback about different dimensions of the first metrics may be provided for developers and users of the trust model, so that the developers and the users can better understand performance of the trust model in different dimensions.

The examples of the trust model described in the foregoing embodiments are classified based on a trust assessment granularity. Optionally, the trust model may alternatively be classified based on a function, and a trust model corresponding to each function may be further classified based on an assessment granularity. Trust models may be the same or different for different application scenarios. For example, in the communication network, for a point-to-point file sharing and communication environment, a characteristic of direct interaction between users is taken into consideration, behavior assessment of a peer is emphasized, and a point-to-point (point to point, P2P) trust model may be used. For a conventional computer network environment, the focus is on trust of devices and data, and a network trust model may be used. For a mobile wireless Ad hoc network, an Ad hoc trust model may be used to process dynamic and decentralized network environments. The wireless sensor network has problems of resource limitation and energy efficiency. In this case, a wireless sensor network (wireless sensor network, WSN) trust model and the like may be used.

In a possible design, before S201 is performed, the scenario information of the application scenario and/or the entity information of the first entity in the application scenario may be further preprocessed. For example, noise and irregular items in the scenario information and the entity information may be removed. For example, abnormal data is removed, and missing data is supplemented. A specific preprocessing manner is not limited herein.

In this design, the scenario information of the application scenario and/or the entity information of the first entity in the application scenario are/is preprocessed, to improve accuracy of the scenario information and the entity information. This further generate a better or more stable assessment environment, and improve accuracy of trust model assessment.

In a possible design, the step of generating the assessment environment based on the first metric, the scenario information of the application scenario, and the entity information of the first entity in the application scenario in S201 may include: extracting a scenario feature of the scenario information of the application scenario and an entity feature of the entity information of the first entity; and generating the assessment environment based on the first metric, the scenario feature, and the entity feature of the first entity.

For example, the scenario feature of the scenario information of the application scenario and the entity feature of the entity information of the first entity may be extracted by using a feature extraction model trained through machine learning or deep learning. A training manner of the feature extraction model is mature, and details are not described herein.

In this design, the scenario feature of the scenario information of the application scenario and the entity feature of the entity information of the first entity are extracted, and the assessment environment is generated based on the first metric, the scenario information, and the entity feature of the first entity, to further improve effectiveness or accuracy of the assessment environment, and more accurately restore the application scenario. This improves accuracy of trust model assessment.

Optionally, the generating the assessment environment based on the first metric, the scenario feature, and the entity feature of the first entity may include: fusing the scenario feature and the entity feature of the first entity, to obtain a fusion feature; and generating the assessment environment based on the first metric and the fusion feature. The scenario feature and the entity feature of the first entity are first fused, and then the assessment environment is generated based on the obtained fusion feature, to improve authenticity and accuracy of the assessment environment.

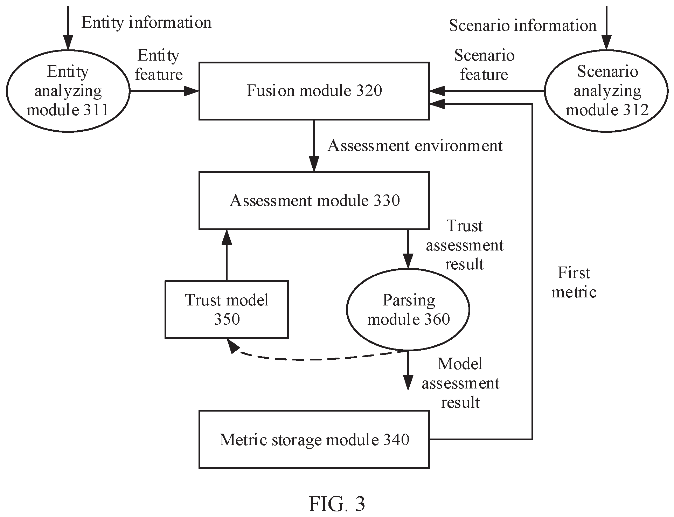

For example, the trust model assessment method provided in embodiments of this application may be implemented by using a trust model assessment system. For example, FIG. 3 is a diagram of a principle of a trust model assessment system according to an embodiment of this application. As shown in FIG. 3, the trust model assessment system may include: an entity analyzing module 311, a scenario analyzing module 312, a fusion module 320, an assessment module 330, a metric storage module 340, a trust model 350, and a parsing module 360. The foregoing modules may be software modules. These software modules may be integrated on one device, or may be deployed on different devices. This is not limited herein.

The entity analyzing module 311 may obtain the entity information of the first entity, extract the entity feature of the first entity based on the entity information of the first entity, and transmit the entity feature of the first entity to the fusion module 320. The scenario analyzing module 312 may obtain the scenario information of the application scenario, extract the scenario feature of the application scenario based on the scenario information of the application scenario, and transmit the scenario feature of the application scenario to the fusion module 320.

The fusion module 320 may fuse the scenario feature of the application scenario and the entity feature of the first entity, and generate the assessment environment based on the first metric and the fusion result. For example, the fusion result may be referred to as a fusion feature. The fusion module 320 may transmit information about the generated assessment environment to the assessment module 330. The first metric may be stored in the metric storage module 340, and is provided by the metric storage module 340 to the fusion module 320.

The assessment module 330 may invoke the trust model 350, perform trust assessment on the first entity based on the assessment environment, and output the trust assessment result of the first entity, where the trust assessment result of the first entity includes the trust assessment result corresponding to each first metric.

The assessment module 330 may transmit, to the parsing module 360, the trust assessment result corresponding to the first metric. The parsing module 360 may output the assessment result (or referred to as a model assessment result) of the trust model based on the trust assessment result corresponding to the first metric.

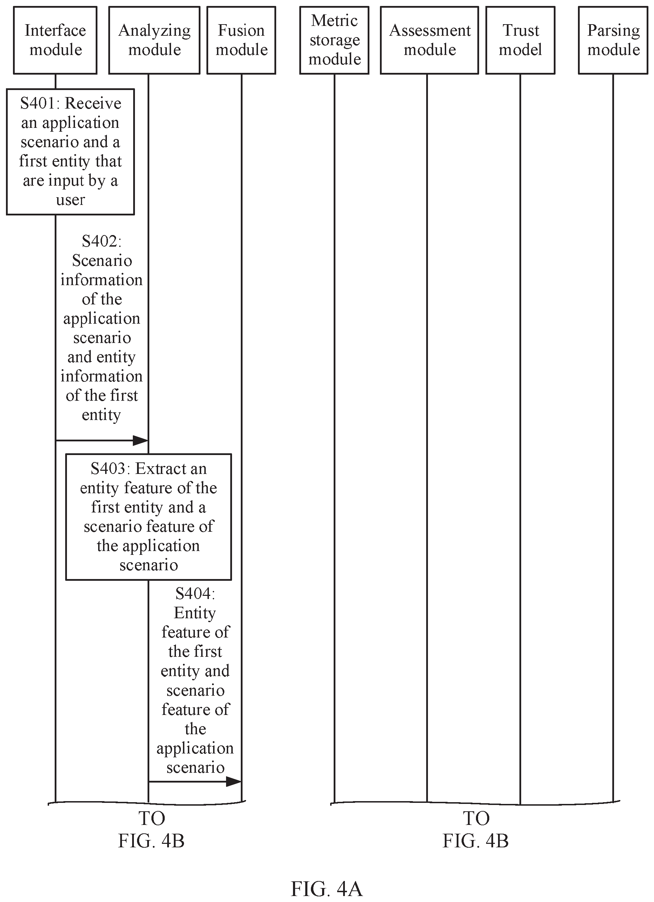

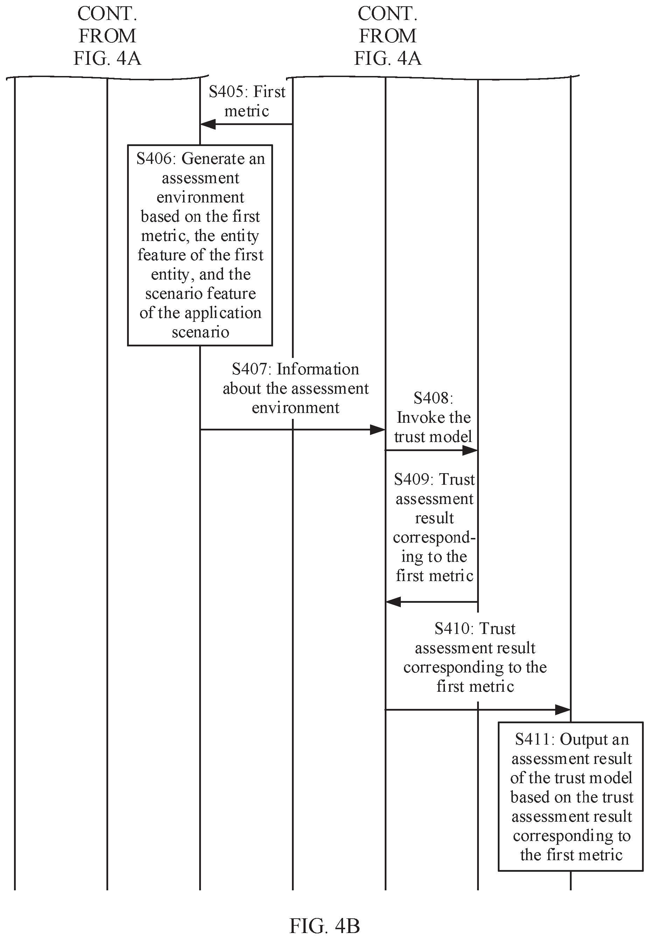

For the principle of the trust model assessment system described above, refer to FIG. 4A and FIG. 4B below. FIG. 4A and FIG. 4B are a schematic flowchart of another implementation of a trust model assessment method according to an embodiment of this application. As shown in FIG. 4A and FIG. 4B, based on the trust model assessment system shown in FIG. 3, the trust model assessment method may include S401 to S411.

S401: An interface module (interface module) receives an application scenario and a first entity that are input by a user.

For example, the trust model assessment system may further include the interface module (not shown in FIG. 3). The interface module may provide an input interface for the user, and the user may input the specific application scenario and the first entity that require trust model assessment, for example, input a scenario name and an entity name. The interface module may obtain scenario information of the application scenario and entity information of the first entity based on the application scenario and the first entity that are input by the user. For an obtaining manner, refer to the descriptions in the foregoing embodiments. Details are not described again.

S402: The interface module sends the scenario information of the application scenario and the entity information of the first entity to an analyzing module (analyzing module).

The analyzing module may include the entity analyzing module (entity analyzing module) and the scenario analyzing module (scenario analyzing module) shown in FIG. 3. The interface module may send the entity information of the first entity to the entity analyzing module, and send the scenario information of the application scenario to the scenario analyzing module.

Correspondingly, the analyzing module receives the scenario information of the application scenario and the entity information of the first entity.

Optionally, the interface module may send an assessment request (assessment request) message to the analyzing module, where the assessment request message includes the scenario information of the application scenario and the entity information of the first entity.

S403: The analyzing module extracts an entity feature of the first entity and a scenario feature of the application scenario.

S404: The analyzing module sends the entity feature of the first entity and the scenario feature of the application scenario to a fusion module (fusion module).

Correspondingly, the fusion module receives the entity feature of the first entity and the scenario feature of the application scenario.

S405: The fusion module obtains a first metric from a metric storage module (metric storage module).

In other words, the metric storage module sends the first metric to the fusion module, and the fusion module receives the first metric.

S406: The fusion module generates an assessment environment based on the first metric, the entity feature of the first entity, and the scenario feature of the application scenario.

S407: The fusion module sends information about the assessment environment to an assessment module (assessment module).

Correspondingly, the assessment module receives the information about the assessment environment.

S408: The assessment module invokes a trust model (trust model), and performs trust assessment on the first entity based on the assessment environment.

S409: The trust model returns, to the assessment module, a trust assessment result corresponding to the first metric.

In other words, the trust model outputs the trust assessment result of the first entity, where the trust assessment result of the first entity includes a trust assessment result corresponding to each first metric.

S410: The assessment module sends, to a parsing module (parsing module), the trust assessment result corresponding to the first metric.

Correspondingly, the parsing module receives the trust assessment result corresponding to the first metric.

S411: The parsing module outputs an assessment result of the trust model based on the trust assessment result corresponding to the first metric.

For example, the parsing module may store and parse the trust assessment result, to obtain the assessment result of the trust model.

Optionally, the first metric used when the assessment environment is generated in the trust model assessment method is related to the application scenario and/or the first entity. For example, the method further includes: outputting/determining the first metric based on the scenario information and the entity information of the first entity.

For example, the step of obtaining the first metric, the scenario information of the application scenario, and the entity information of the first entity in the foregoing embodiment may include: obtaining the scenario information of the application scenario and the entity information of the first entity; and obtaining the first metric based on the scenario information of the application scenario and the entity information of the first entity.

In a possible design, the specific application scenario and the first metric corresponding to the first entity may be predefined, pre-configured, or configured. For example, a matching assessment metric may be configured for the application scenario and the entity, to obtain a mapping relationship between the assessment metric and the application scenario and the entity. The obtaining the first metric based on the scenario information of the application scenario and the entity information of the first entity includes: determining, based on the mapping relationship, an assessment metric, for example, a target assessment metric, matching the application scenario and the first entity; and selecting, from the target assessment metric, at least one metric as the first metric. In other words, the mapping relationship may be predefined, pre-configured, or configured.

For example, in an implementation, the mapping relationship may be pre-configured in hardware and/or software of the electronic device, for example, recorded/written into the metric storage module in advance, and may be changed by using the software or the hardware.

For another example, in another implementation, the mapping relationship may be configured for the electronic device, for example, recorded/written into the hardware and/or the software of the electronic device.

For another example, in still another implementation, the mapping relationship does not need to be configured by another device, and may be information predefined (recorded/written in advance) in the hardware and/or the software of the electronic device, or may be understood as information that cannot be changed by another device.

An implementation of the mapping relationship is not limited in this application.

For example, a developer or another user may predefine or configure the mapping relationship or an association relationship between the application scenario and the first entity and the first metric. First metrics corresponding to different application scenarios and/or first entities may be the same or different.

In this design, the first metric may be selected for a current application environment and the first entity in a customized manner based on a user design, and the trust model is assessed. This can improve accuracy of an assessment result of a trust model, so that the assessment result of the trust model reflects performance of the trust model from a more accurate and effective dimension.

In another possible design, alternatively, the first metric used for generating the assessment environment may be dynamically determined based on the scenario information and the entity information of the first entity. For example, the obtaining the first metric based on the scenario information of the application scenario and the entity information of the first entity includes: dynamically determining, by using a pre-trained neural network model and based on the scenario information and the entity information of the first entity in a deep learning or machine learning manner, an assessment metric, for example, a target assessment metric, matching the application scenario and the first entity; and selecting, from the target assessment metric, at least one metric as the first metric. For example, the scenario information and the entity information of the first entity (or the scenario feature and the entity feature, or a fusion feature) may be input into the pre-trained neural network model, and the pre-trained neural network model may output, based on the input, the first metric that matches the application scenario and the first entity.

For example, the obtaining the first metric based on the scenario information of the application scenario and the entity information of the first entity includes: fusing the scenario information of the application scenario and the entity information of the first entity, to obtain the fusion feature; and obtaining the first metric based on the fusion feature. For details about the fusion feature, refer to the descriptions in the foregoing embodiments. For example, the scenario feature of the scenario information of the application scenario and the entity feature of the entity information of the first entity may be extracted, and the scenario feature and the entity feature are fused, to obtain the fusion feature.

The first metric is obtained based on the fusion feature, to further improve validity or accuracy of the first metric, and select a more adaptive first metric for the application scenario and the first entity to assess the trust model.

It may be understood that the neural network model may be obtained by training a neural network by using the scenario feature and the entity feature as an input and using the first metric annotated for the scenario feature and the entity feature as an output. A training process is not described herein.

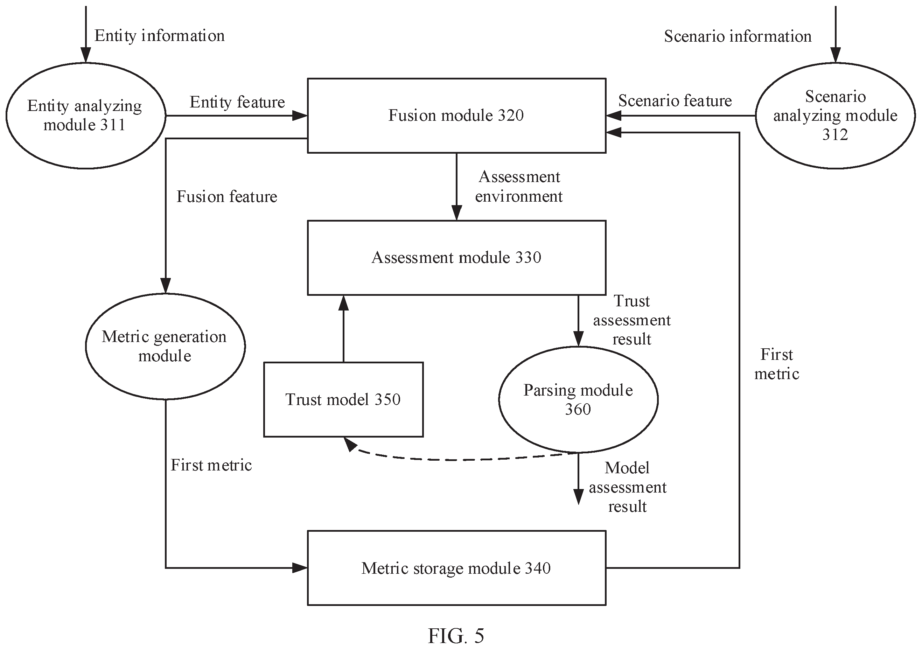

For example, FIG. 5 is a diagram of a principle of another trust model assessment system according to an embodiment of this application. As shown in FIG. 5, based on FIG. 3, the trust model assessment system may further include a metric generation module 370. The metric generation module 370 may be a software module.

The fusion module 320 may further transmit a fusion result (for example, the fusion feature) of the scenario feature and the entity feature to the metric generation module 370. The metric generation module 370 may output, based on the fusion feature and by using the pre-trained neural network model, the first metric that matches the application scenario and the first entity. The metric generation module 370 may transmit the generated first metric to the metric storage module 340 for storage. The metric storage module 340 may provide the fusion module 320 with the first metric that matches the application scenario and the first entity, so that the fusion module 320 generates the assessment environment.

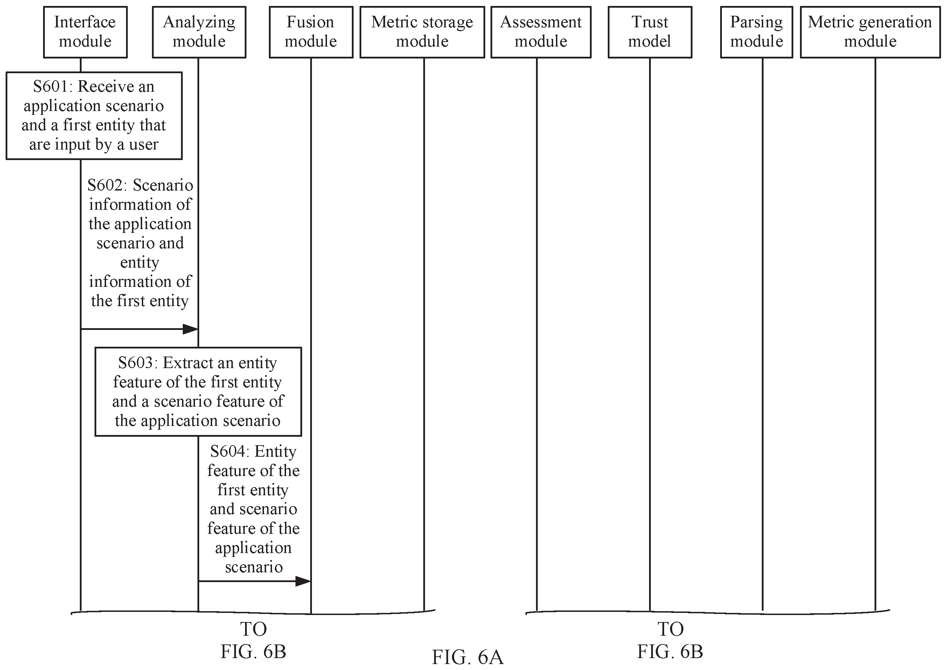

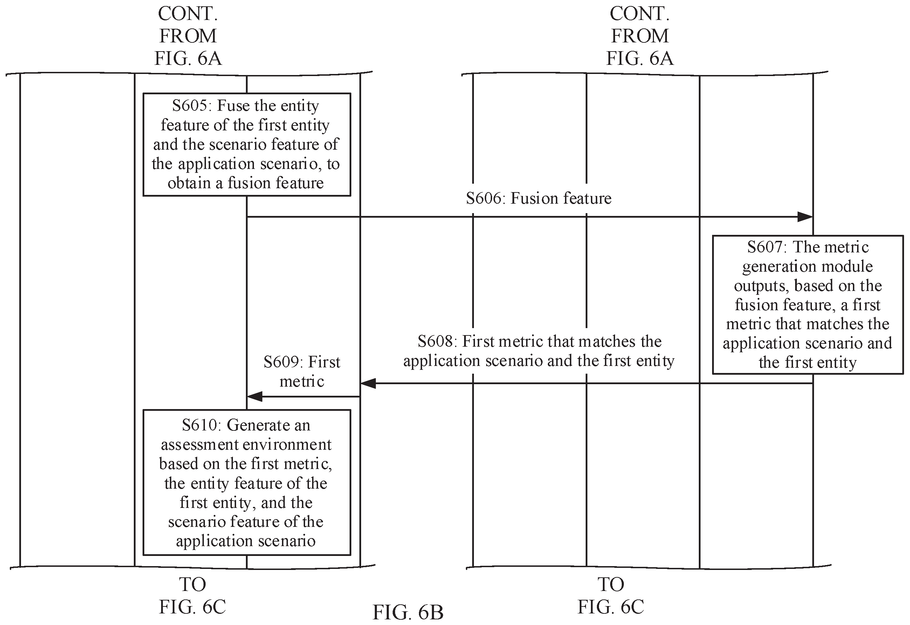

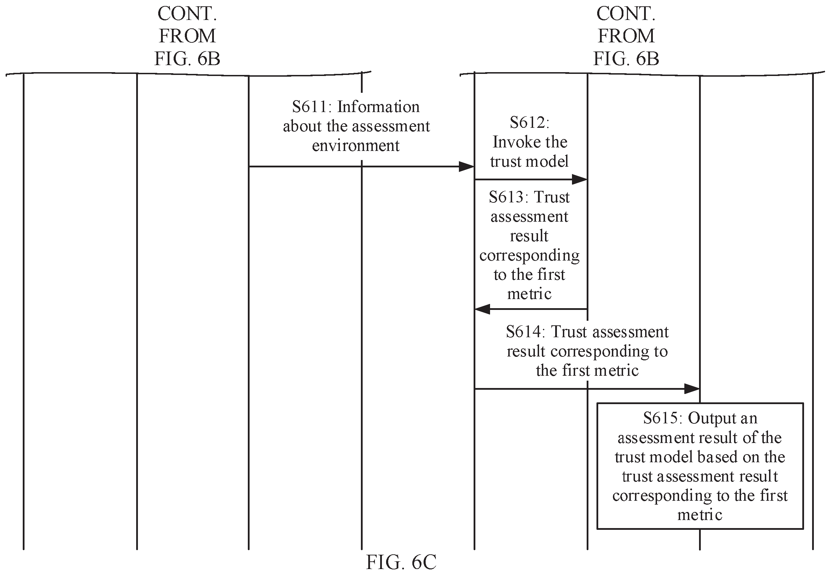

For the principle of the trust model assessment system described in FIG. 5, refer to FIG. 6A to FIG. 6C below. FIG. 6A to FIG. 6C are a schematic flowchart of still another implementation of a trust model assessment method according to an embodiment of this application. As shown in FIG. 6A to FIG. 6C, based on the trust model assessment system shown in FIG. 5, the trust model assessment method may include S601 to S615.

S601: An interface module receives an application scenario and a first entity that are input by a user.

S602: The interface module sends scenario information of the application scenario and entity information of the first entity to an analyzing module.

Correspondingly, the analyzing module receives the scenario information of the application scenario and the entity information of the first entity.

S603: The analyzing module extracts an entity feature of the first entity and a scenario feature of the application scenario.

S604: The analyzing module sends the entity feature of the first entity and the scenario feature of the application scenario to a fusion module.

Correspondingly, the fusion module receives the entity feature of the first entity and the scenario feature of the application scenario.

For S601 to S604, refer to S401 to S404. Details are not described again.

S605: The fusion module fuses the entity feature of the first entity and the scenario feature of the application scenario, to obtain a fusion feature.

For S605, refer to fusing the entity feature and the scenario feature in S406. Details are not described again.

S606: The fusion module sends the fusion feature to a metric generation module (metric generate module).

Correspondingly, the metric generation module receives the fusion feature.

S607: The metric generation module outputs, based on the fusion feature, a first metric that matches the application scenario and the first entity.

For S606 and S607, refer to the foregoing manner of dynamically determining the first metric by using the pre-trained neural network model. Details are not described again.

S608: The metric generation module sends the first metric that matches the application scenario and the first entity to a metric storage module.

Correspondingly, the metric storage module receives the first metric that matches the application scenario and the first entity.

S609: The fusion module obtains the first metric from the metric storage module.

It may be understood that the first metric is a metric that matches the application scenario and the first entity.

S610: The fusion module generates an assessment environment based on the first metric, the entity feature of the first entity, and the scenario feature of the application scenario.

S611: The fusion module sends information about the assessment environment to the assessment module.

Correspondingly, the assessment module receives the information about the assessment environment.

S612: The assessment module invokes a trust model, and performs trust assessment on the first entity based on the assessment environment.

S613: The trust model returns, to the assessment module, a trust assessment result corresponding to the first metric.

S614: The assessment module sends, to a parsing module, the trust assessment result corresponding to the first metric.

Correspondingly, the parsing module receives the trust assessment result corresponding to the first metric.

S615: The parsing module outputs an assessment result of the trust model based on the trust assessment result corresponding to the first metric.

For S609 to S615, refer to S405 to S411. Details are not described again.

In this design, the first metric may be dynamically selected for a current application environment and the first entity through deep learning or machine learning in a customized manner, and the trust model is assessed. This can improve accuracy of an assessment result of a trust model, enhance adaptability of trust model assessment to different application scenarios, and increase assessment flexibility, so that the assessment result of the trust model reflects performance of the trust model from a more accurate and effective dimension.

In some possible designs, the first metric used when the assessment environment is generated in the trust model assessment method may alternatively be one or more first metrics selected by the user from first metrics obtained based on the scenario information of the application scenario and the entity information of the first entity. For example, the user may perform a selection operation on the first metric. The method further includes: in response to the selection operation performed by the user on the first metric, using a first metric indicated by the selection operation as the first metric used for generating the assessment environment. In this design, the first metric obtained based on the scenario information of the application scenario and the entity information of the first entity may be referred to as a candidate first metric, and the first metric selected by the user from the candidate first metric may be referred to as a target first metric.

For example, in the foregoing embodiment, the step of generating the assessment environment based on the first metric, the scenario information of the application scenario, and the entity information of the first entity in the application scenario may include: in response to the selection operation performed by the user on the first metric (the candidate first metric), generating the assessment environment based on the first metric (the target first metric) indicated by the selection operation, the scenario information, and the entity information of the first entity.

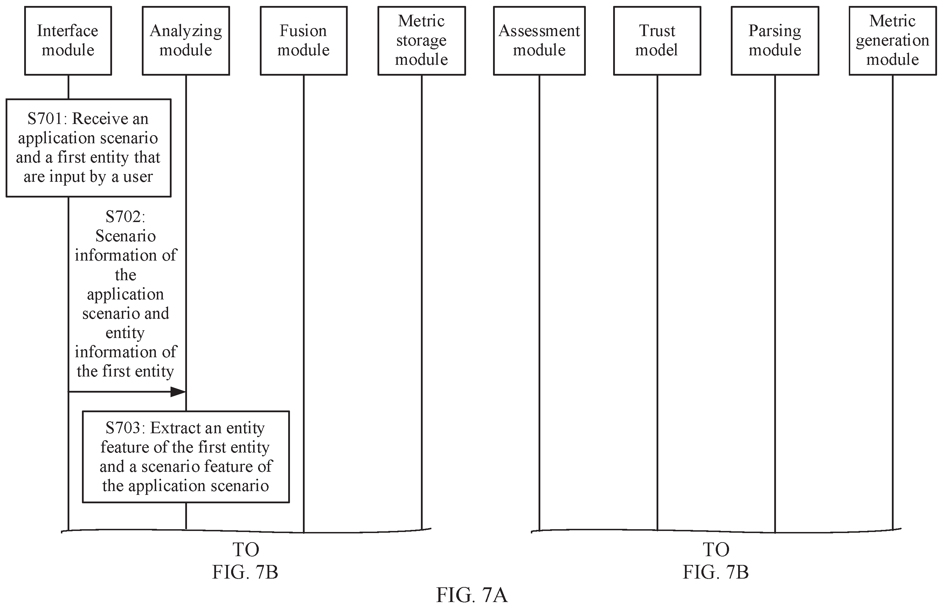

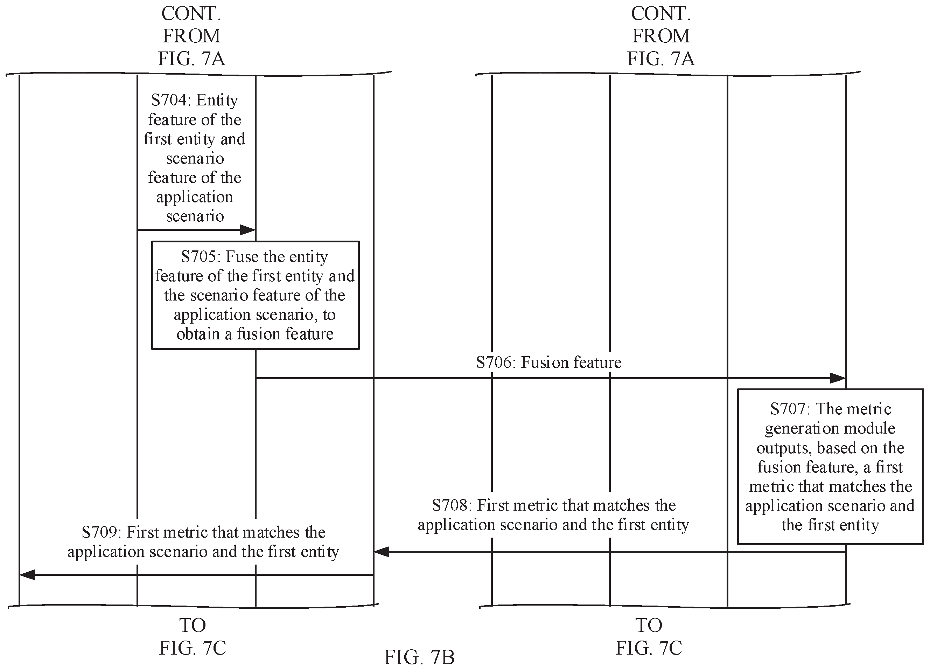

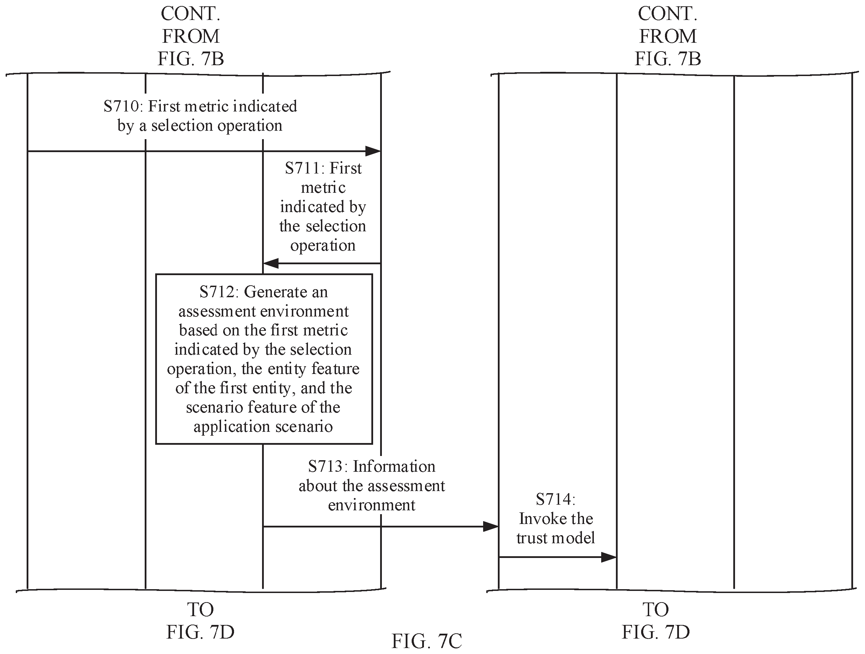

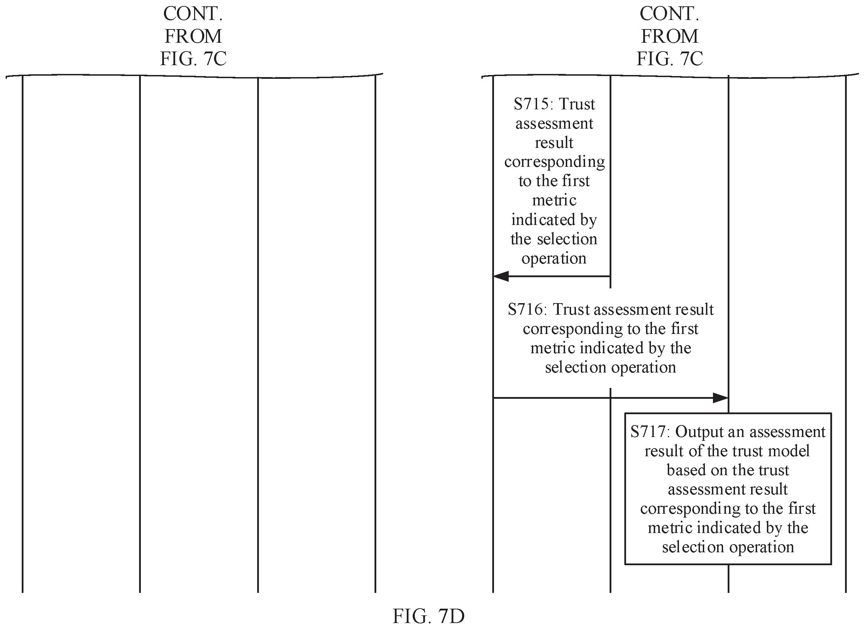

For example, based on the procedure of the trust model assessment method shown in FIG. 6A to FIG. 6C, a function of selecting the first metric by the user is implemented. FIG. 7A to FIG. 7D are a schematic flowchart of still another implementation of a trust model assessment method according to an embodiment of this application. As shown in FIG. 7A to FIG. 7D, the trust model assessment method may include S701 to S717.

S701: An interface module receives an application scenario and a first entity that are input by a user.

S702: The interface module sends scenario information of the application scenario and entity information of the first entity to an analyzing module.

Correspondingly, the analyzing module receives the scenario information of the application scenario and the entity information of the first entity.

S703: The analyzing module extracts an entity feature of the first entity and a scenario feature of the application scenario.

S704: The analyzing module sends the entity feature of the first entity and the scenario feature of the application scenario to a fusion module.

Correspondingly, the fusion module receives the entity feature of the first entity and the scenario feature of the application scenario.

S705: The fusion module fuses the entity feature of the first entity and the scenario feature of the application scenario, to obtain a fusion feature.

S706: The fusion module sends the fusion feature to a metric generation module.

Correspondingly, the metric generation module receives the fusion feature.

S707: The metric generation module outputs, based on the fusion feature, a first metric that matches the application scenario and the first entity.

S708: The metric generation module sends the first metric that matches the application scenario and the first entity to a metric storage module.

Correspondingly, the metric storage module receives the first metric that matches the application scenario and the first entity.

For S701 to S708, refer to S601 to S608. Details are not described again.

S709: The metric storage module sends, to the interface module, the first metric that matches the application scenario and the first entity.

Correspondingly, the interface module receives the first metric that matches the application scenario and the first entity.

The interface module receives the first metric (namely, a candidate first metric) that matches the application scenario and the first entity, and may present, to the user, the first metric that matches the application scenario and the first entity for the user to select. The user may select one or more target first metrics from the candidate first metric. For example, the interface module may present the candidate first metric to the user through a human-computer interaction interface, and the user may perform a selection operation on the human-computer interaction interface, to select the target first metric. An implementation of performing the selection operation by the user is not limited herein.

After the user selects the target first metric, the interface module may perform S710.

S710: The interface module sends, to the metric storage module, the first metric indicated by the selection operation, that is, the target first metric.

Correspondingly, the metric storage module receives the first metric indicated by the selection operation.

For example, after receiving the first metric indicated by the selection operation, the metric storage module may update the stored first metric that matches the application scenario and the first entity, and update the first metric to the first metric indicated by the selection operation.

S711: The fusion module obtains, from the metric storage module, the first metric indicated by the selection operation.

S712: The fusion module generates an assessment environment based on the first metric indicated by the selection operation, the entity feature of the first entity, and the scenario feature of the application scenario.

S713: The fusion module sends information about the assessment environment to the assessment module.

Correspondingly, the assessment module receives the information about the assessment environment.

S714: The assessment module invokes a trust model, and performs trust assessment on the first entity based on the assessment environment.

S715: The trust model returns, to the assessment module, a trust assessment result corresponding to the first metric indicated by the selection operation.

S716: The assessment module sends, to a parsing module, the trust assessment result corresponding to the first metric indicated by the selection operation.

Correspondingly, the parsing module receives the trust assessment result corresponding to the first metric indicated by the selection operation.

S717: The parsing module outputs an assessment result of the trust model based on the trust assessment result corresponding to the first metric indicated by the selection operation.

For S711 to S717, refer to S609 to S615. Details are not described again.

In this design, the first metric may be selected for the current application environment and the first entity in a customized manner, and the user may be further allowed to adjust the first metric based on a specific requirement of the user. For example, the user may select a more meaningful or related first metric based on a requirement, to further improve a value of the assessment result of the trust model for the user. In addition, by screening and selecting a more related first metric, noise caused by irrelevant or secondary metrics may be further reduced, and accuracy of an assessment result is further improved.

Alternatively, the user may select some specific metrics for assessment based on a requirement for saving assessment time and resources, to improve assessment efficiency.

It should be understood that the types of the first metrics described in the foregoing embodiments are all examples for description. During specific implementation, the first metrics may alternatively be classified into more or fewer categories. A type of the first metric is not limited in this application.

For a case in which the first metrics includes a plurality of metrics, the process of generating the assessment environment based on the first metric and performing assessment based on the assessment environment in the foregoing embodiments (the embodiments shown in FIG. 4A and FIG. 4B, FIG. 6A to FIG. 6C, FIG. 7A to FIG. 7D, and the like) may be understood as that the process is implemented based on the plurality of first metrics in a parallel manner. In a possible design, for the plurality of first metrics, the process of generating assessment environments based on the first metrics and performing assessment based on the assessment environments may be implemented in a serial manner. For example, S201 to S203 may include: for each first metric, generating, based on the first metric, the scenario information of the application scenario, and the entity information of the first entity in the application scenario, the assessment environment corresponding to the first metric; invoking the trust model, performing trust assessment on the first entity based on the assessment environment corresponding to the first metric, and outputting the trust assessment result of the first entity; and outputting the assessment result of the trust model based on the trust assessment result corresponding to the first metric.

In other words, in this design, a trust assessment capability of a trust model may be first assessed for one first metric. After the trust model corresponding to the first metric is assessed, a trust model corresponding to a next first metric may continue to be assessed until trust models corresponding to all first metrics are assessed. In other words, each first metric corresponds to one assessment environment, and different first metrics correspond to different assessment environments.

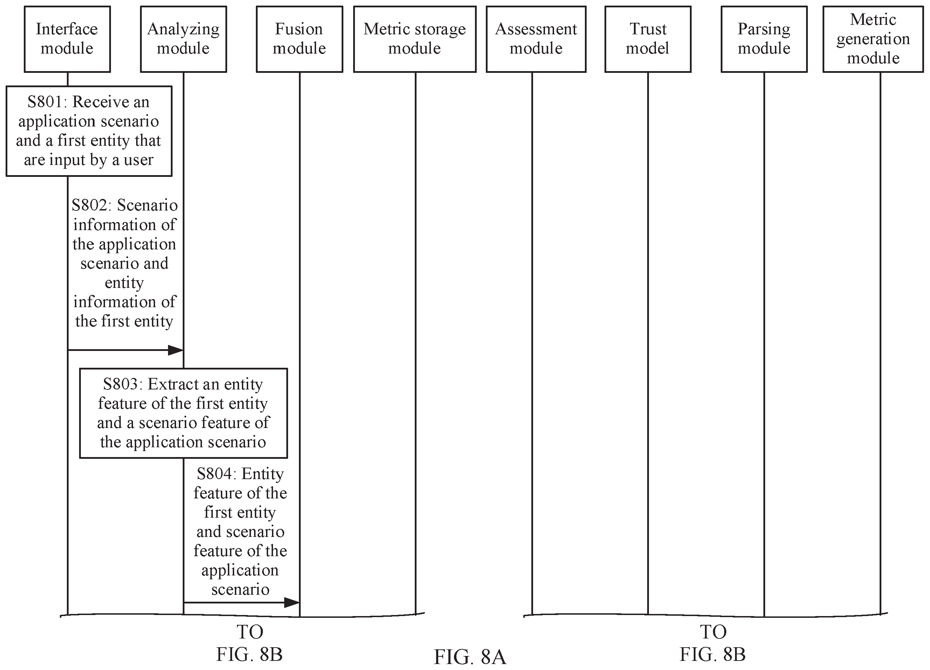

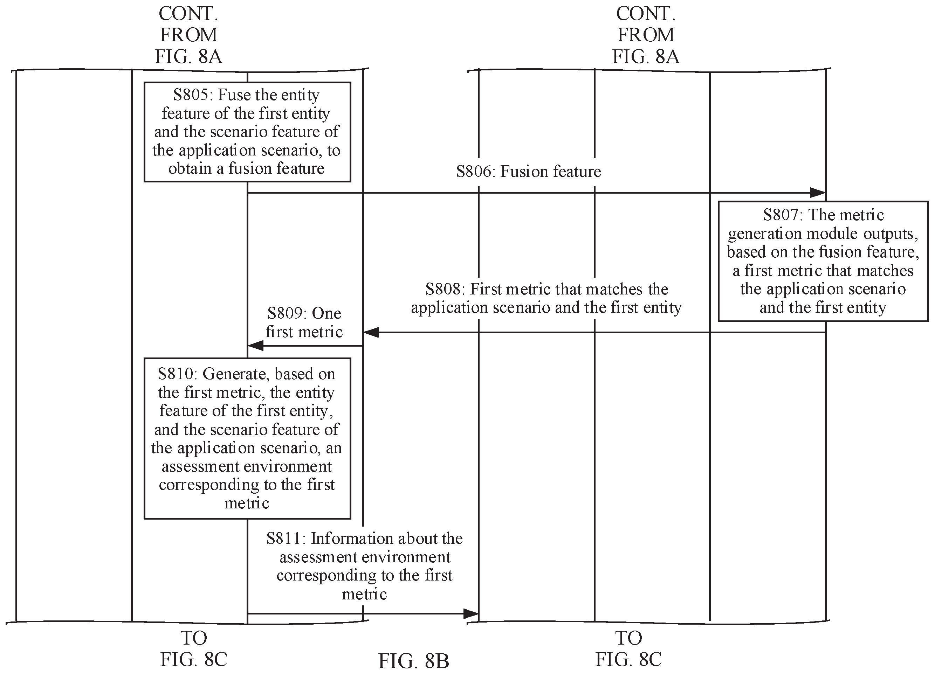

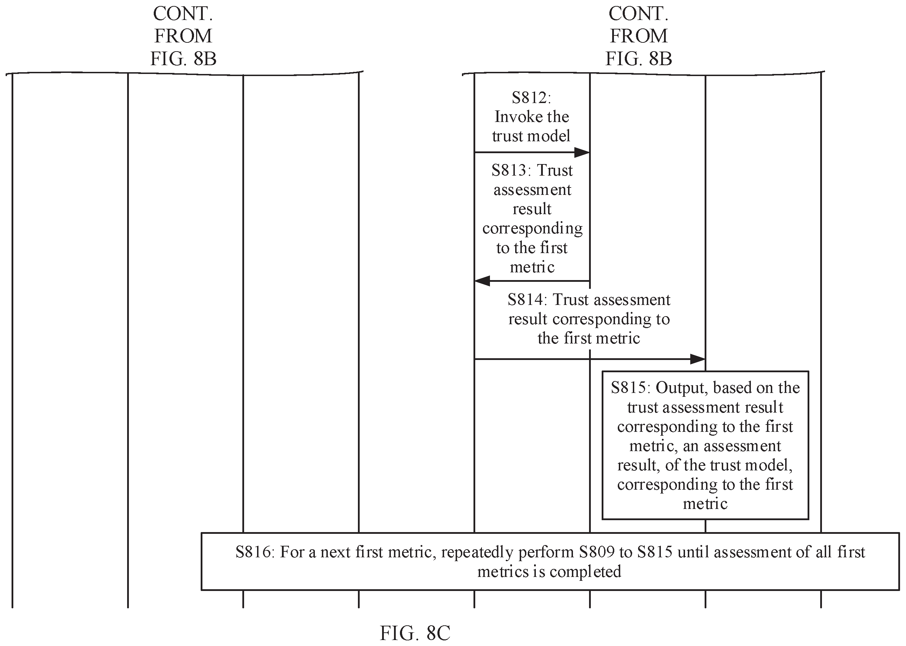

The process of generating the assessment environment based on the first metric and performing assessment based on the assessment environment in the embodiment shown in FIG. 6A to FIG. 6C (which may alternatively be the embodiment shown in FIG. 4A and FIG. 4B, FIG. 7A to FIG. 7D, or the like) is used as an example. FIG. 8A to FIG. 8C are a schematic flowchart of still another implementation of a trust model assessment method according to an embodiment of this application. As shown in FIG. 8A to FIG. 8C, the trust model assessment method may include S801 to S816.

S801: An interface module receives an application scenario and a first entity that are input by a user.

S802: The interface module sends scenario information of the application scenario and entity information of the first entity to an analyzing module.

Correspondingly, the analyzing module receives the scenario information of the application scenario and the entity information of the first entity.

S803: The analyzing module extracts an entity feature of the first entity and a scenario feature of the application scenario.

S804: The analyzing module sends the entity feature of the first entity and the scenario feature of the application scenario to a fusion module.

Correspondingly, the fusion module receives the entity feature of the first entity and the scenario feature of the application scenario.

S805: The fusion module fuses the entity feature of the first entity and the scenario feature of the application scenario, to obtain a fusion feature.

S806: The fusion module sends the fusion feature to a metric generation module.

Correspondingly, the metric generation module receives the fusion feature.

S807: The metric generation module outputs, based on the fusion feature, a first metric that matches the application scenario and the first entity.

S808: The metric generation module sends the first metric that matches the application scenario and the first entity to a metric storage module.

Correspondingly, the metric storage module receives the first metric that matches the application scenario and the first entity.

For S801 to S808, refer to S601 to S608. Details are not described again.

S809: The fusion module obtains one first metric from the metric storage module.

It may be understood that the first metric is any metric that matches the application scenario and the first entity.

S810: The fusion module generates, based on the first metric, the entity feature of the first entity, and the scenario feature of the application scenario, an assessment environment corresponding to the first metric.

S811: The fusion module sends, to an assessment module, information about the assessment environment corresponding to the first metric.

Correspondingly, the assessment module receives the information about the assessment environment corresponding to the first metric.

S812: The assessment module invokes a trust model, and performs trust assessment on the first entity based on the assessment environment corresponding to the first metric.

S813: The trust model returns, to the assessment module, a trust assessment result corresponding to the first metric.

S814: The assessment module sends, to a parsing module, the trust assessment result corresponding to the first metric.

Correspondingly, the parsing module receives the trust assessment result corresponding to the first metric.

S815: The parsing module outputs, based on the trust assessment result corresponding to the first metric, an assessment result, of the trust model, corresponding to the first metric.

For S809 to S815, refer to S609 to S615. A difference lies in that each step in S809 to S815 is implemented for one first metric. Details are not described again.

S816: For a next first metric, repeatedly perform S809 to S815 until assessment of all first metrics is completed.

For example, the next metric may be obtained, and an assessment result, of the trust model, corresponding to the next first metric is output based on a process of S810 to S815. This process is repeated until assessment results, of the trust model, corresponding to all the first metrics are obtained.

In this design, for the plurality of first metrics, the process of generating assessment environments based on the first metrics and performing assessment based on the assessment environments is implemented in a serial manner. Focusing on a single metric (only one specific first metric is assessed at a time) can make the assessment process simpler and clearer, and easy to understand and explicate. In addition, for the plurality of first metrics, the assessment environments are generated based on the first metrics and assessment is performed based on the assessment environments in a serial manner, to further enhance an assessment depth and improve assessment accuracy. For example, resources and attention may be focused on one metric, to avoid noise and interference caused by the plurality of metrics, and more clearly understand and analyze importance and a function of each metric.

In a possible design, the generated assessment environment in the foregoing embodiments may include an initial assessment environment and at least one other assessment environment. The initial assessment environment is generated based on the first metric, the scenario information, and the entity information of the first entity. For details, refer to descriptions in the foregoing embodiments. The another assessment environment may be obtained by adjusting a parameter in the initial assessment environment. For example, a scenario feature and an entity feature in the initial assessment environment may be changed or adjusted, to obtain the another assessment environment.

For example, in this design, the method further includes: adjusting the parameter in the assessment environment, to obtain at least one updated assessment environment; and invoking the trust model to perform trust assessment on the first entity based on the updated assessment environment, and outputting the trust assessment result of the first entity. The assessment environment is the initial assessment environment, and the updated assessment environment is the another assessment environment.

In this design, the assessment environment can be extended to provide a richer assessment environment for trust model assessment and improve accuracy of trust model assessment. For example, the trust model may be assessed based on a plurality of assessment environments such as the initial assessment environment and the another assessment environment, and performance of the trust model is comprehensively assessed based on assessment results obtained in different assessment environments.

In a possible design, the assessment result of the trust model described in the foregoing embodiments may further indicate an update policy of the trust model.

For example, as described in the foregoing embodiments, the assessment result of the trust model may indicate the trust assessment capability of the trust model in the dimension of the first metric. For different first metrics, the trust assessment capability of the trust model may be good in dimensions of some first metrics, and is poor in dimensions of some other first metric. The assessment result of the trust model may indicate that the trust model needs to be optimized or updated for the first metrics corresponding to the poor trust assessment capability, to improve performance of the trust model in the dimensions of the first metrics. In other words, the update policy of the trust model may include dimensions in which performance of the trust model needs to be optimized or updated. For example, the update policy may indicate insufficient security of the trust model.

Optionally, the update policy of the trust model may alternatively indicate a specific manner of updating the trust model, or an improvement or optimization suggestion. For example, when robustness of the trust model needs to be optimized, the update policy may alternatively indicate to train the trust model based on more training data. For another example, when security of the trust model needs to be optimized, the update policy may alternatively indicate a specific manner of improving a design of a trust assessment curve.

For example, the assessment result of the trust model may include specific indication information, and the indication information may indicate the update policy of the trust model.

In this design, the assessment result of the trust model may indicate the update policy of the trust model, and can indicate an improvement direction (dimension) of the trust model for a developer or the user, or provide a more detailed model optimization suggestion for the user, so that the user can further optimize or adjust the trust model based on the assessment result of the trust model. This improves performance of the trust model.

In other words, this design can provide feedback and guidance for optimizing the trust model.

In addition, the trust model is updated based on the assessment result of the trust model, to further improve generalization performance of the trust model for different application scenarios. For example, for a same trust model, after the trust model is updated in different application scenarios in the manner of this design, the trust model may present better performance in different application scenarios, and can adapt to more application scenarios.

Optionally, the trust model assessment method provided in this embodiment of this application may further include: updating the trust model based on the assessment result of the trust model.

For example, for a manner of updating the trust model, refer to the indication of the update policy in the foregoing embodiments. Details are not described herein again.

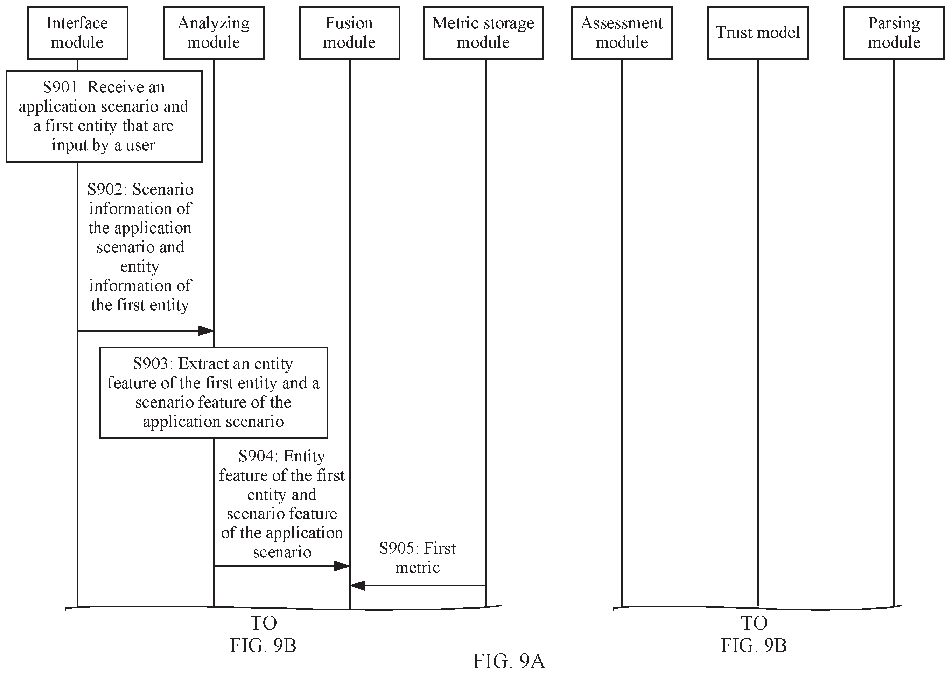

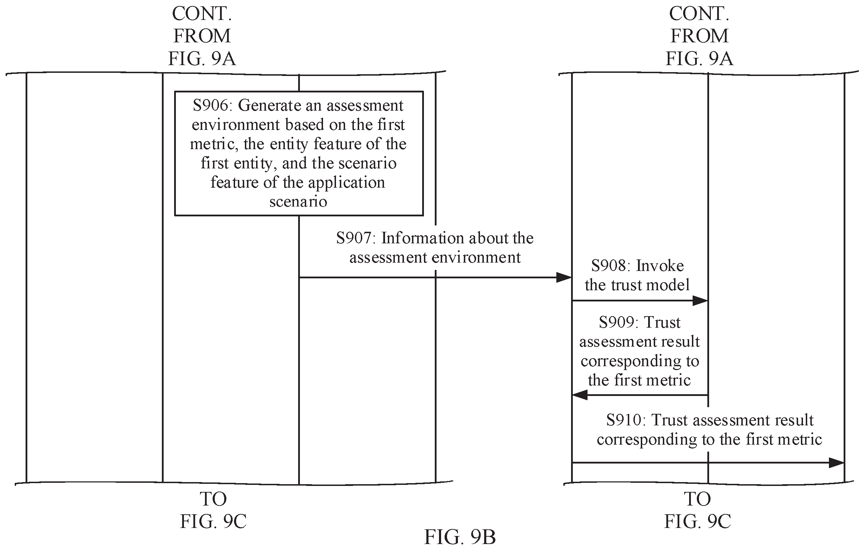

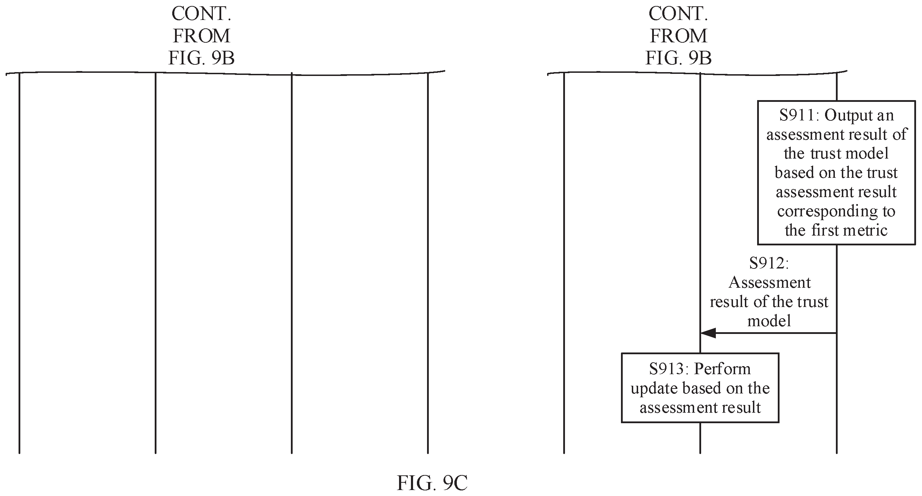

The embodiment shown in FIG. 4A and FIG. 4B is used as an example. FIG. 9A to FIG. 9C are a schematic flowchart of still another implementation of a trust model assessment method according to an embodiment of this application. As shown in FIG. 9A to FIG. 9C, the trust model assessment method may include S901 to S911.

S901: An interface module receives an application scenario and a first entity that are input by a user.

S902: The interface module sends scenario information of the application scenario and entity information of the first entity to an analyzing module.

Correspondingly, the analyzing module receives the scenario information of the application scenario and the entity information of the first entity.

S903: The analyzing module extracts an entity feature of the first entity and a scenario feature of the application scenario.

S904: The analyzing module sends the entity feature of the first entity and the scenario feature of the application scenario to a fusion module.

Correspondingly, the fusion module receives the entity feature of the first entity and the scenario feature of the application scenario.

S905: The fusion module obtains the first metric from the metric storage module.

S906: The fusion module generates an assessment environment based on the first metric, the entity feature of the first entity, and the scenario feature of the application scenario.

S907: The fusion module sends information about the assessment environment to the assessment module.

Correspondingly, the assessment module receives the information about the assessment environment.

S908: The assessment module invokes a trust model, and performs trust assessment on the first entity based on the assessment environment.

S909: The trust model returns, to the assessment module, a trust assessment result corresponding to the first metric.

S910: The assessment module sends, to a parsing module, the trust assessment result corresponding to the first metric.

Correspondingly, the parsing module receives the trust assessment result corresponding to the first metric.

S911: The parsing module outputs an assessment result of the trust model based on the trust assessment result corresponding to the first metric.

For S901 to S911, refer to S401 to S411. Details are not described again.

S912: The parsing module sends the assessment result of the trust model to the trust model.

Correspondingly, the trust model receives the assessment result.

S913: The trust model is updated based on the assessment result.

It may be understood that the trust model shown in the figure may be a software module that stores or manages the trust model, for example, a model maintenance module. The module may receive the assessment result, and update the trust model based on the assessment result.

In this design, the trust model is updated based on the assessment result, to improve the trust assessment capability of the trust model.

In a possible design, the assessment result of the trust model in the foregoing embodiment may be a semantic trust assessment report.

For example, the trust assessment result corresponding to the first metric may be input into a large language model (large language model, LLM), the trust assessment result corresponding to the first metric is parsed by using the LLM, and the semantic trust assessment report is output as an assessment result of the trust model.

For example, the parsing module may be deployed on a semantic information processor, and the parsing module or the semantic information processor may process semantic layer information by using the LLM, parse the trust assessment result corresponding to the first metric, and generate a semantic trust assessment report.

Optionally, the semantic trust assessment report may provide an improvement suggestion for the trust model, for example, provide a semantic adjustment solution and an optimization manner, so that the user can improve the trust model.

In this design, the semantic trust assessment report is used as the assessment result of the trust model, so that the user can better understand the trust assessment capability of the trust model in the dimension of the first metric, and more intuitively understand dimensions from which the trust model can be improved, and/or a manner in which the trust model can be improved.

In some other embodiments, in the trust model assessment method, functions implemented by the step of extracting the scenario feature and the entity feature and the step of outputting the trust model assessment result based on the trust assessment result of the first entity may be integrated into one module for implementation, for example, an artificial intelligence (artificial intelligence, AI) module.

Division into functional modules for implementing the trust model assessment method is not limited in this application.

It should be understood that the foregoing mainly describes the solutions provided in embodiments of this application from a perspective of logic between the steps in the trust model assessment method. It may be understood that, to implement functions of the foregoing method, an embodiment of this application further provides an apparatus for implementing functions of the trust model assessment method, for example, a trust model assessment apparatus. A function of the apparatus may be implemented by hardware, or may be implemented by executing corresponding software by hardware. The hardware or the software includes one or more units or modules corresponding to the functions of the foregoing method, that is, the apparatus may include corresponding hardware structures and/or software modules for performing the functions of the foregoing method. The apparatus may be an electronic device, or may be a chip disposed in the electronic device or a functional module in the electronic device. For the electronic device, refer to the electronic device in the foregoing embodiments.

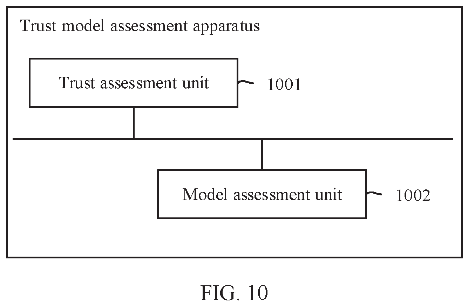

For example, FIG. 10 is a diagram of composition of a trust model assessment apparatus according to an embodiment of this application. As shown in FIG. 10, the trust model assessment apparatus may include a trust assessment unit 1001 and a model assessment unit 1002.

The trust assessment unit 1001 is configured to perform trust assessment on a first entity based on a trust model, to obtain a trust assessment result of the first entity, where the trust assessment result includes at least one group, each group of trust assessment results corresponds to one type of first metric, and the first metric indicates an assessment dimension of the trust model.

The model assessment unit 1002 assesses the trust model based on the trust assessment result, to obtain an assessment result of the trust model, where the assessment result of the trust model indicates a trust assessment capability of the trust model in the dimension of the first metric.

For example, the trust assessment unit 1001 may include the analyzing module, the fusion module, the assessment module, and the metric generation/storage module in the foregoing embodiments. The model assessment unit 1002 may include the parsing module described in the foregoing embodiments.

In a possible design, the trust assessment unit 1001 is specifically configured to: obtain a first metric, scenario information of an application scenario, and entity information of a first entity; generate an assessment environment based on the first metric, the scenario information of the application scenario, and the entity information of the first entity, where the assessment environment indicates an environment in which the first entity runs in the application scenario; and invoke a trust model to perform trust assessment on the first entity based on the assessment environment, to obtain a trust assessment result of the trust model for the first entity.

In a possible design, the trust assessment unit 1001 is specifically configured to: obtain the scenario information of the application scenario and the entity information of the first entity; and obtain the first metric based on the scenario information of the application scenario and the entity information of the first entity.

In a possible design, the first metric used for generating the assessment environment may be predefined, pre-configured, or configured. For example, a matching assessment metric may be configured for the application scenario and the entity, to obtain a mapping relationship between the assessment metric and the application scenario and the entity. The trust assessment unit 1001 is specifically configured to: determine, based on the mapping relationship, an assessment metric, for example, a target assessment metric, matching the application scenario and the first entity; and select, from the target assessment metric, at least one metric as the first metric.

In another possible design, alternatively, the first metric used for generating the assessment environment may be dynamically determined based on the scenario information and the entity information of the first entity. For example, the trust assessment unit 1001 is further configured to: dynamically determine, by using a pre-trained neural network model and based on the scenario information and the entity information of the first entity in a deep learning or machine learning manner, an assessment metric, for example, a target assessment metric, matching the application scenario and the first entity; and select, from the target assessment metric, at least one metric as the first metric.

In still another possible design, the first metric used for generating the assessment environment may alternatively be one or more first metrics selected by the user from first metrics obtained based on the scenario information of the application scenario and the entity information of the first entity. For example, the trust assessment unit 1001 is further configured to: in response to the selection operation performed by the user on the first metric, use a first metric indicated by the selection operation as the first metric used for generating the assessment environment.

In a possible design, the trust assessment unit 1001 is specifically configured to: fuse the scenario information of the application scenario and the entity information of the first entity, to obtain a fusion feature; and obtain the first metric based on the fusion feature.

In a possible design, the trust assessment unit 1001 is specifically configured to: for each first metric, generate, based on the first metric, the scenario information of the application scenario, and the entity information of the first entity in the application scenario, the assessment environment corresponding to the first metric; and perform trust assessment on the first entity based on the assessment environment corresponding to the first metric, and output the trust assessment result of the first entity.

In other words, in this design, each first metric corresponds to one assessment environment, and different first metrics correspond to different assessment environments.

In a possible design, the generated assessment environment may include an initial assessment environment and at least one other assessment environment. The initial assessment environment is generated based on the first metric, the scenario information, and the entity information of the first entity. The another assessment environment may be obtained by adjusting a parameter in the initial assessment environment. For example, the trust assessment unit 1001 is further configured to: adjust the parameter in the assessment environment, to obtain at least one updated assessment environment; and invoke the trust model to perform trust assessment on the first entity based on the updated assessment environment, and output the trust assessment result of the first entity. The assessment environment is the initial assessment environment, and the updated assessment environment is the another assessment environment.

In a possible design, the application scenario includes at least one of the following: a cybersecurity scenario, an intelligent system scenario, an online platform scenario, a complex decision environment scenario, an Internet of things scenario, a cloud computing scenario, an edge computing scenario, a network slicing and virtualized network scenario, a software-defined network scenario, a blockchain scenario, and a communication network scenario. The first entity includes at least one of the following: a hardware device or module, an application or a software module, and data exchanged between hardware and/or software.

In a possible design, the assessment result of the trust model further indicates an update policy of the trust model.

In a possible design, the apparatus further includes: an update unit (not shown in FIG. 10), configured to update the trust model based on the assessment result of the trust model.

In a possible design, the assessment result of the trust model is a semantic trust assessment report.

In a possible design, the first metric includes one or more of the following metrics: security of data, comprehensiveness of a trust assessment result, usability of a trust model, functionality of the trust model, robustness of the trust model, neutrality of the trust assessment result, and explicability of the trust assessment result.

It should be understood that division into the units in the apparatus is merely logical function division. In actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit with a signal processing capability. In an implementation process, the steps in the foregoing methods or the foregoing units may be implemented by using a hardware integrated logic circuit in a processor element, or may be implemented in a form of software invoked by the processing element.

In an example, a unit in any one of the foregoing apparatuses may be one or more integrated circuits configured to implement the foregoing method, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms.

For another example, when a unit in the apparatus may be implemented in a manner in which a processing element schedules a program, the processing element may be a general-purpose processor, such as a CPU or another processor that can invoke a program. For still another example, the units may be integrated and implemented in a form of a system-on-a-chip (system-on-a-chip, SOC).

When the apparatus includes a receiving unit, the receiving unit in the apparatus is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a trust model assessment apparatus, used in the foregoing electronic device. The trust model assessment apparatus may include a processor and an interface circuit. There may be one or more processors. The processor is configured to communicate with another apparatus through the interface circuit, and perform the steps performed by the electronic device in the foregoing method.

In one implementation, a unit in the electronic device for implementing each corresponding step in the foregoing method may be implemented in a manner in which a processing element schedules a program. Alternatively, the apparatus used in the electronic device may include a processing element and a storage element, and the processing element invokes a program stored in the storage element, to perform the method performed by the electronic device in the foregoing method embodiments. The storage element may be a storage element located on a same chip as the processing element, that is, an on-chip storage element.

In another implementation, a program configured to perform the foregoing method may be located on a storage element on a chip different from that for the processing element, that is, located on an off-chip storage element. In addition, the processing element invokes or loads the program on the on-chip storage element from the off-chip storage element, to invoke and perform the method in the method embodiments.

For example, an embodiment of this application may further provide a trust model assessment apparatus. The trust model assessment apparatus may include a processor, configured to execute computer instructions stored in a memory. When the computer instructions are executed, the apparatus is enabled to perform the method performed by the electronic device. The memory may be located in the trust model assessment apparatus, or may be located outside the trust model assessment apparatus. In addition, there are one or more processors.

In still another implementation, the units that implement the steps in the foregoing method may be configured as one or more processing elements, and the processing elements may be correspondingly disposed on the electronic device. The processing element herein may be an integrated circuit, for example, one or more ASICs, one or more DSPs, one or more FPGAs, or a combination of these types of integrated circuits. These integrated circuits may be integrated together to form a chip.

The units that implement the steps in the foregoing method may be integrated together and implemented in a form of a SOC, and the SOC chip is configured to implement the corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units may be implemented by invoking a program by the processing element, and functions of some units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system, and the chip system may be used in the foregoing electronic device. The chip system includes one or more interface circuits and one or more processors. The interface circuit is interconnected with the processor through a line. The processor receives computer instructions from a memory of the electronic device through the interface circuit and executes the computer instructions, to implement the method in the foregoing method embodiments.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the method in the embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions are run on an electronic device or built in a chip of the electronic device, the electronic device may be enabled to perform the method in the foregoing embodiments.

Optionally, an embodiment of this application further provides a trust model assessment apparatus, including a transceiver unit and a processing unit. The transceiver unit may be configured to receive and send information, or configured to communicate with another network element (for example, a terminal device, a network device, or another electronic device or apparatus). The processing unit may be configured to process data. The apparatus may implement the method in the foregoing embodiments by using the transceiver unit and the processing unit.

Optionally, an embodiment of this application further provides a computer program product. When the computer program product is executed, the method in the foregoing embodiments may be implemented.

According to the foregoing embodiments, an embodiment of this application further provides an artificial intelligence model. The artificial intelligence model has a function of implementing the method in the foregoing embodiments.

Optionally, the artificial intelligence model includes one or more models, and when the artificial intelligence model includes a plurality of models, the plurality of models implement different functions in the method according to the foregoing embodiments.

An embodiment of this application further provides a communication system, including a first entity and a second entity. The second entity interacts with the first entity to implement the method in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A trust model assessment method, wherein the method comprises:
performing trust assessment on a first entity based on a trust model, to obtain a trust assessment result of the first entity, wherein the trust assessment result comprises at least one group, each group of trust assessment results corresponds to one first metric, and the first metric indicates an assessment dimension of the trust model; and
assessing the trust model based on the trust assessment result, to obtain an assessment result of the trust model, wherein the assessment result of the trust model indicates a trust assessment capability of the trust model in the dimension of the first metric.

2. The method according to claim 1, wherein the performing trust assessment on the first entity based on the trust model, to obtain the trust assessment result of the first entity comprises:
obtaining the first metric, scenario information of an application scenario, and entity information of the first entity;
generating an assessment environment based on the first metric, the scenario information of the application scenario, and the entity information of the first entity, wherein the assessment environment indicates an environment in which the first entity runs in the application scenario; and
invoking the trust model to perform trust assessment on the first entity based on the assessment environment, to obtain a trust assessment result of the trust model for the first entity.

3. The method according to claim 2, wherein the obtaining the first metric, the scenario information of the application scenario, and the entity information of the first entity comprises:
obtaining the scenario information of the application scenario and the entity information of the first entity; and
obtaining the first metric based on the scenario information of the application scenario and the entity information of the first entity.

4. The method according to claim 3, wherein the obtaining the first metric based on the scenario information of the application scenario and the entity information of the first entity comprises:
fusing the scenario information of the application scenario and the entity information of the first entity, to obtain a fusion feature; and
obtaining the first metric based on the fusion feature.

5. The method according to any one of claims 2 to 4, wherein the application scenario comprises at least one of the following: a cybersecurity scenario, an intelligent system scenario, an online platform scenario, a complex decision environment scenario, an Internet of things scenario, a cloud computing scenario, an edge computing scenario, a network slicing and virtualized network scenario, a software-defined network scenario, a blockchain scenario, and a communication network scenario; and
the first entity comprises at least one of the following: a hardware device or module, an application or a software module, and data exchanged between hardware and/or software.

6. The method according to any one of claims 2 to 5, wherein the entity information of the first entity comprises static attribute information and/or dynamic behavior information of the first entity.

7. The method according to any one of claims 1 to 6, wherein the assessment result of the trust model further indicates an update policy of the trust model.

8. The method according to any one of claims 1 to 7, wherein the method further comprises:
updating the trust model based on the assessment result of the trust model.

9. The method according to any one of claims 1 to 8, wherein the assessment result of the trust model is a semantic trust assessment report.

10. The method according to any one of claims 1 to 9, wherein the first metric comprises one or more of the following metrics: security of data, comprehensiveness of a trust assessment result, usability of a trust model, functionality of the trust model, robustness of the trust model, neutrality of the trust assessment result, and explicability of the trust assessment result.

11. A trust model assessment apparatus, wherein the apparatus comprises a module configured to perform the method according to any one of claims 1 to 10.

12. A trust model assessment apparatus, wherein the apparatus comprises a processor, configured to perform the method according to any one of claims 1 to 10.

13. A computer-readable storage medium, wherein the computer-readable storage medium comprises instructions, and when the instructions are run, the method according to any one of claims 1 to 10 is implemented.

14. A computer program product, wherein when the computer program product is executed, the method according to any one of claims 1 to 10 is implemented.

15. A chip system, wherein the chip system comprises one or more interface circuits and one or more processors, the interface circuit and the processor are interconnected through a line, and the processor receives computer instructions from a memory of an electronic device through the interface circuit and executes the computer instructions, to implement the method according to any one of claims 1 to 10.
